# EUROPEAN PATENT SPECIFICATION

(11) **EP 0 536 964 B1**
(45) Date of publication and mention of the grant of the patent: **18.03.1998**
(21) Application number: 92309047.6
(22) Date of filing: 05.10.1992
(51) Int. Cl.: G09G 3/36

(54) **Active matrix-type display device having a reduced number of data bus lines**
Aktive Flüssigkristall-Matrix-Anzeige mit verminderter Anzahl von Datenbusleitungen
Dispositif d'affichage à cristaux liquides à matrice active avec un nombre réduit de lignes de bus de données

(30) Priority: 05.10.1991 JP 258198/91; 09.07.1992 JP 182264/92
(43) Date of publication of application: 14.04.1993
(73) Proprietor: FUJITSU LIMITED, Kawasaki-shi, Kanagawa 211 (JP)
(72) Inventor: Oki, Ken-ichi, c/o Fujitsu Limited, Kawasaki-shi, Kanagawa 211 (JP); Yanai, Ken-ichi, c/o Fujitsu Limited, Kawasaki-shi, Kanagawa 211 (JP)
(74) Representative: Billington, Lawrence Emlyn

(56) References cited:
- EP-A- 0 456 453
- PATENT ABSTRACTS OF JAPAN vol. 14 no. 512 (P-1129) ,9 November 1990 & JP-A-02 214819 (FUJITSU LTD) 27 August 1990,
- PATENT ABSTRACTS OF JAPAN vol. 14 no. 366 (P-1089) ,8 August 1990 & JP-A-02 135318 (FUJITSU LTD) 24 May 1990,

## Description

The present invention relates to an active matrix-type display device using an electro-optic material e.g. liquid crystal.

An active matrix-type display device, as as well as a simple matrix-type display device, is is thin, and therefore, is often used in the various thin display devices of information terminals. Generally, liquid crystal is used as the electro-optic material of this device. Compared to the simple matrix-type liquid crystal display device, in active matrix-type liquid crystal display devices, since individual pixel elements are independently driven, contrast is not reduced based upon a reduction in duty ratio, and the angle of visibility is not reduced, even when the display capacity is increased to increase the number of lines. Therefore, the active matrix-type liquid crystal display device enables a color display in the same way as in a cathode ray tube (CRT), and is prevalent in flat display devices.

However, since the active matrix-type liquid crystal display device has a complexity of configuration, in that one thin film transistor (TFT) is provided as a switching element for each pixel, a complex manufacturing process is required, and equipment therefor is expensive. Also, the manufacturing yield is low. Further, in the active matrix-type liquid crystal display device, the number of driver ICs increases according to an increase in display abilities, thereby making the active matrix-type liquid crystal display device expensive. Therefore, in order to improve the low manufacturing yield, various types of active matrix-type liquid crystal display devices have been suggested.

One type is a counter-matrix active matrix-type liquid crystal device in which scan bus lines and data bus lines are formed on different substrates, so that intersections of scan bus lines and data bus lines on the same substrate are not used (see: U.S. Patent Nos. 4,694,287, 4717,244, 4,678,282).

In other types of devices disclosed in Japanese Unexamined Patent Publication Nos. 62-218987, 3-38689, two neighboring pixel elements are respectively connected to the same data bus line via two independently controlable TFTs, and are driven at time division sequences, thereby reducing the number of the data bus lines. Since the data bus driver is more complex than the scan bus driver, the driver configuration of this device is very simple. However, in the above documents, examples of the counter-matrix active matrix-type liquid crystal device in which the number of data bus lines is reduced are not disclosed.

Further, in the active matrix-type liquid crystal display device, improvement in display quality and duration are also desired. In any type of active matrix-type liquid crystal device, a DC component resulting from parasitic static capacity and the unipolarity of the address pulses is generated. For example, flickers and residual images may be generated. Particularly, for a stationary image, a burning phenomenon may occur. Also, the life-time of active matrix-type liquid crystal devices may be shortened.

In the Japanese Unexamined Patent Publication No. 53-144297, an active matrix-type display device in which one pixel electrode is connected to two data bus lines via two switching elements is disclosed. The two switching elements are respectively controlled by positive and negative address pulses on the same scan bus line. Two positive and negative address pulses are applied for each scanning frame cycle on the scan bus line and two data signals having the same voltages and opposite polarities to each other are applied to the data bus lines in synchronization with the address pulses. By this, two different switching elements are effected individually for each frame cycle, and the influence of the parasitic static capacity is cancelled. Therefore, in this device, the above-mentioned DC component can be reduced, and the above problems associated with display quality and duration are improved. However, this device has a problem in that the number of data bus lines is increased.

Further, the Japanese Unexamined Patent Publication NOs. 63-96636, 2-214819, 4-14091, 4-14092 and 4-102825 disclosed active matrix-type display devices in which each pixel electrode is connected to the data bus line via two different switching elements respectively controlled by positive and negative address pulses, and these two switching elements are simultaneously or individually effected for each scanning frame, thereby canceling the influence of the parasitic static capacity, and the above problems are reduced.

An object of the present invention is to improve the display quality in an active matrix-type display device in which the number of data bus lines is reduced.

The attached claim 1 defines an active matrix-type display device according to the present invention.

Further aspects of the invention are as defined in the subsequent claims.

For a better understanding of the invention and to show how the same may be carried into effect, reference will now be made, by way of example, to the accompanying drawings, in which:-
Fig. 1 is a block circuit diagram illustrating a prior art liquid crystal display device including control portions;
Fig. 2 is an equivalent circuit diagram illustrating a prior art active matrix-type liquid crystal device;
Fig. 3 is an equivalent circuit diagram illustrating a prior art counter-matrix-type active matrix-type liquid crystal device;
Fig. 4 is an enlarged, perspective view of the device of Fig. 3;
Fig. 5 is a circuit diagram illustrating a prior art active matrix-type display device in which DC components are compensated;
Fig. 6 is a circuit diagram illustrating an embodiment of the active matrix-type liquid crystal display device according to the present invention;
Fig. 7A through 7G are timing diagrams showing the signals in the circuit of Fig. 6;
Fig. 8A through 8D are timing diagrams showing the signals in the circuit of Fig. 6;
Fig. 9A through 9F are timing diagrams showing the signals in the circuit of Fig. 6;
Fig. 10 is a circuit diagram illustrating a second embodiment of the active matrix-type liquid crystal display device according to the present invention;
Fig. 11 is a circuit diagram illustrating a third embodiment of the active matrix-type liquid crystal display device according to the present invention;
Fig. 12A through 12E are timing diagrams showing the signals in the circuit of Fig. 11;
Fig. 13 is a circuit diagram illustrating a fourth embodiment of the active matrix-type liquid crystal display device according to the present invention;
Fig. 14A through 14E are timing diagrams showing the signals in the circuit of Fig. 13;
Fig. 15A through 15E are timing diagrams showing the signals in the circuit of Fig. 13;
Fig. 16 is a circuit diagram illustrating a fifth embodiment of the active matrix-type liquid crystal display device according to the present invention;
Fig. 17 is a layout diagram of the device of Fig.16;
Fig. 18 is a circuit diagram illustrating a sixth embodiment of the active matrix-type liquid crystal display device according to the present invention;
Fig. 19A through 19G are timing diagrams showing the signals in the circuit of Fig. 18;
Fig. 20 is a circuit diagram illustrating a seventh embodiment of the active matrix-type liquid crystal display device according to the present invention.

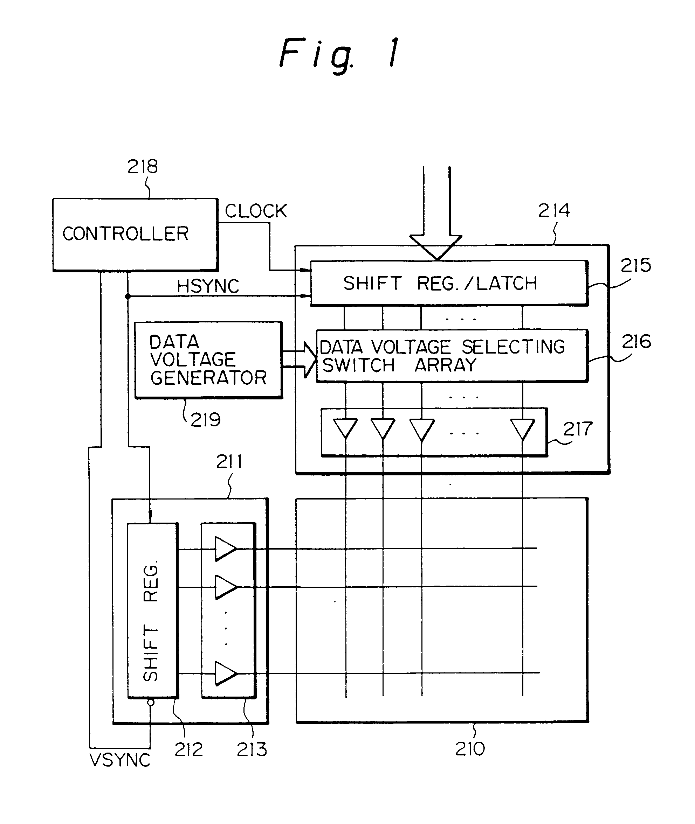

Before the description of embodiments of the present invention, prior art of the liquid crystal display devices will be explained with reference to Figs. 1 through 5.

In Fig. 1, which illustrates a general liquid crystal display device including control portions, reference numeral 210 designates a liquid crystal panel having a plurality of scan bus lines and a plurality of data bus lines that are arranged parallel to each other. A scan bus driver 211 applies address pulses to the scan bus lines and a data bus driver 214 applies displaying data signals to the data bus lines. The address pulses are sequentially and repeatedly applied from the top line to the bottom line of the scan bus lines, and this repeat cycle time is designated as a frame. In an interlace method, where the address pulses are applied on every other line, there are double frames having first and second frames, which are respectively designated as odd frames and even frames.

Reference numeral 218 designates a controller for generating control signals such as a clock signal, a horizontal scanning signal (HSYNC), a vertical synchronous signal (VSYNC). Reference numeral 219 designates a data voltage generator for generating data voltages that the data bus driver 214 applies to the data bus lines, and the data voltage generator 219 generates a plurality of voltages corresponding to gradation levels when gradation display is performed. Further, in the liquid crystal display device, two different data voltages having reverse polarities are required to be applied to each display cell for every frame, therefore, the data voltage generator 219 generates two kinds of gradation level data voltages.

The scan bus driver 211 comprises a shift register 212 and an output circuit 213. The shift register 212 shifts a signal designating the position of the scan bus lines to which the address pulse is applied according to the HSYNC signal. The output circuit 213 is a driver circuit for outputting the address signal to each scan bus line according to the output signal from the shift register 212.

The data bus driver 214 comprises a shift register/latch 215, a data voltage selecting switch array 216 and an output circuit 217. The shift register/latch 215 receives input display data in synchronization with the clock signal and shifts it, and, when total data of one row is completed, latches it according to the HSYNC signal. The data voltage selecting switch array 216 selects the data voltage of each data bus line from the data voltages generator 219 according to the display data of one row output from the shift register/latch 215. The output circuit 217 is a driver circuit for outputting these data voltages of one row to the data bus lines.

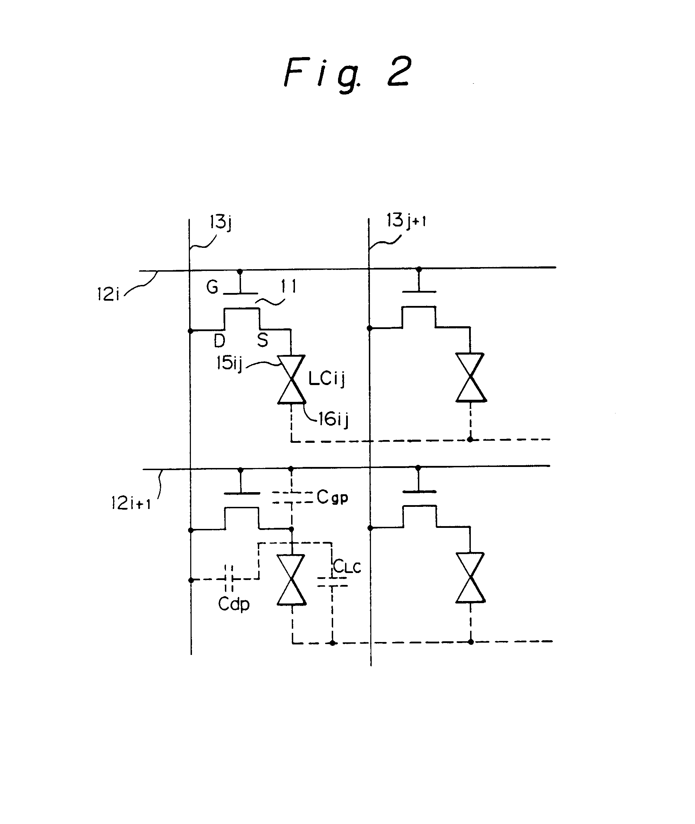

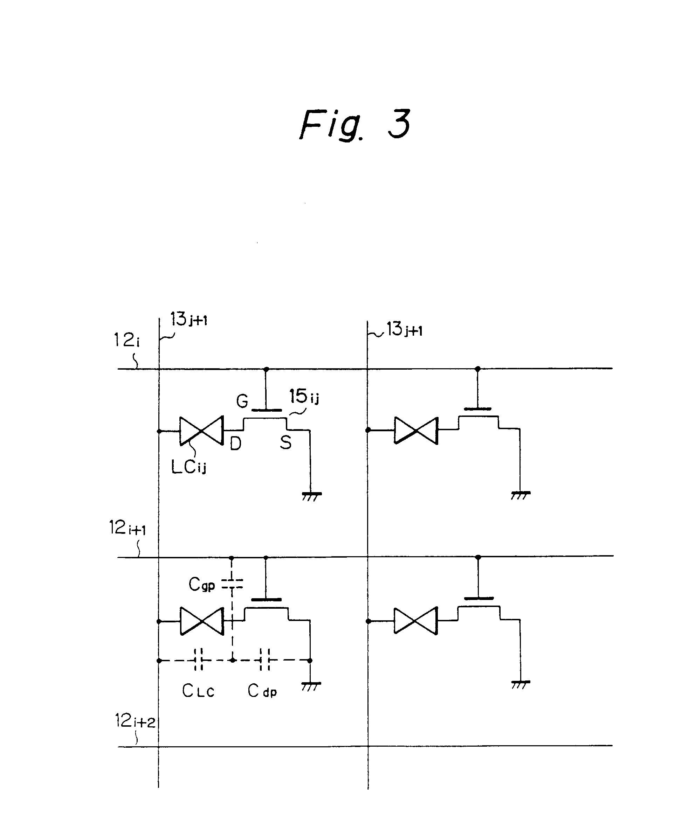

Prior art liquid crystal display devices (display panels) are explained with reference to Figs. 2 and 3.

As illustrated in an equivalent circuit in Fig. 2, scan bus lines 12ᵢ,12ᵢ₊₁, ^{... ...} and data bus lines 13ⱼ,13ⱼ₊₁,^{... ...} are perpendicularly formed on one of two opposing glass substrates (not shown) separated by a gap filled with liquid crystal material.

The scan bus lines 12ᵢ, 12ᵢ₊₁,^{... ...} are electrically isolated from the data bus lines 13ⱼ,13ⱼ₊₁,^{... ...} at their intersections.

At one intersection of the scan bus line such as 12ᵢ and the data bus line such as 13ⱼ, a thin film transistor 11ᵢⱼ is connected between the data bus line 13ⱼ and a pixel electrode 15ᵢⱼ of a liquid crystal cell LCᵢⱼ, and is controlled by a potential of the scan bus line 12ᵢ. That is , the thin film transistor (TFT) 11ᵢⱼ has a drain D connected to the data bus line 13ⱼ, a gate G connected to the scan bus line 12ᵢ, and a source S connected to a pixel electrode 15ᵢⱼ of a liquid crystal cell LCᵢⱼ whose electrode is grounded by the common electrode (not shown) on the other glass substrate (not shown).

The liquid crystal cells are driven as follows. By applying an address pulse to the scan bus line 12ᵢ, all TFTs connected to the scan bus line 12ᵢ are turned ON, and the pixel electrode 15ᵢⱼ and the data bus line 13ᵢ are connected. Therefore, a potential difference between the data bus line and the counter pixel electrode 16 connected to the common reference voltage line is applied to the capacitor formed by the pixel electrodes, the counter pixel electrode 16 and the liquid crystal material therebetween, thereby charging the state of the liquid crystal. When the address pulse is applied to the scan bus line 12, the TFT 11 is turned OFF, and then, the state of the liquid crystal is maintained until the next address pulse is applied.

In the above-mentioned active matrix-type liquid crystal display device of Fig. 2, since the scan bus lines 12ᵢ, 12ᵢ₊₁, ^{... ...} and the data bus lines 13ⱼ, 13ⱼ₊₁, ^{... ...} are formed, and and intersect, on the same substrate, insulation defects or short-circuits may occur at the intersections, and also disconnections owing to a step wise configuration at the intersections may occur in overlying bus lines. Therefore, there is a limit in the overlying layers between overlying and underlying bus lines. As a result, it is not easy to reduce the resistance of the underlying bus lines and increase the thickness of the insulating layers. Thus, it is difficult to completely avoid short-circuits at the intersections.

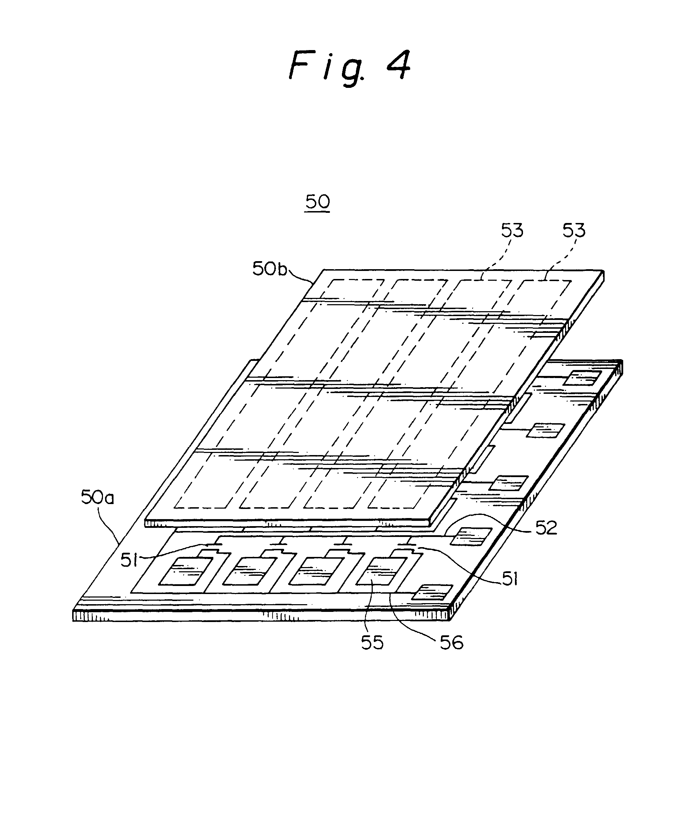

Therefore, as illustrated in Figs. 3 and 4, a counter-matrix-type active liquid crystal display device with scan bus lines 52 formed on one glass substrate 50a and data bus lines 53 formed on the other glass substrate 50b that opposes the first substrate 50a has been suggested (see: above-mentioned U.S. Patent Nos. 4,694,287, 4,717,244, 4,678,282).

Note that Fig. 3 is an equivalent circuit diagram of a prior art counter matrix active liquid crystal display device, and Fig. 4 is its enlarged, perspective view.

That is, liquid crystal is filled between the glass substrates 50a and 50b. The striped data bus lines are formed on the glass substrate 50b, while the scan bus lines, the thin film transistors such as 51, pixel electrodes such as 55 for forming liquid crystal cells, and reference voltage supply bus lines 56 (which are illustrated as the ground in Fig. 3) are formed on the glass substrate 50a.

Liquid crystal is filled between the data bus lines and the pixel electrodes to form the liquid crystal cells . For example, the liquid crystal cell LC ᵢⱼ is connected between the data bus line 53, and the drain D of the thin film transistor 51 whose gate G is connected to the scan bus line 52. Also, the source S of the thin film transistor 51 is connected to the reference voltage supply bus line 56.

In the above-mentioned configuration, of Figs. 3 and 4, the scan bus lines 12ᵢ, 12ᵢ₊₁, ^{... ...} and the data bus lines 13ⱼ, 13ⱼ₊₁, ^{... ...} are orthogonal to each other and they sandwich the liquid crystal, so it is unnecessary to form insulating layers for the intersections since the two kinds of bus lines are not formed on the same substrate, thereby making the configuration simple. Also, since no short-circuit occurs between the data bus lines 13ⱼ, 13ⱼ₊₁, ^{... ...} and the scan bus lines 12ᵢ,12ᵢ₊₁, ^{... ...} display defects are reduced, thereby improving the manufacturing yield.

As described in the above, in any type of active matrix-type liquid crystal device, a DC component resulting from the parasitic static capacity and the unipolarity of the address pulse is generated. This DC component reduces the quality of display, and shortens the life-time of the device.

In the active matrix-type liquid crystal device of Fig. 2, when the data voltage is written to the pixel electrode, the address pulse changes the potential of the scan bus line to a level at which the TFT conducts , and the potential of the scan bus line returns to the base level. That is, if the TFT is an Nch-type transistor, the base level is a negative level such as -20V and the pulse level is a positive level such as +20V. In this way, the potential of the scan bus line is high when the data voltage is written, and the potential of the scan bus line is low whilst the written data voltage is asserted. Therefore, this voltage fluctuation of the scan bus line decreases the potential of the pixel electrode during the assertion period and generates a DC level shift.

If C_{gp} is a parasitic electrostatic capacity between the scan bus line 12ᵢ to which the gate G of the TFT 11ᵢⱼ is connected and the pixel electrode 15ᵢⱼ,
C_{dp} is a parasitic electrostatic capacity between the pixel electrode and the data bus line 13ⱼ, i.e., a parasitic electrostatic capacity between the source S and the drain D of the TFT 11ᵢⱼ ,
C_{lc} is an electrostatic capacity of the liquid crystal cell LCᵢⱼ,
Δ V_{gn} is a fluctuation of the potential of the address pulse, then, the voltage of the DC level shift Δ V_{lc} is expressed by the following formula (1);${\text{Δ V}}_{\text{lc}} {\text{= (-C}}_{\text{gp}} {\text{× Δ V}}_{\text{gn}} {\text{)/(C}}_{\text{lc}} {\text{+ C}}_{\text{gp}} {\text{+ C}}_{\text{dp}} \text{)}$

The wave form of the driving signal of the liquid crystal is required to have no DC component. However, although the driving signal has a symmetric positive and negative wave form, the driving signal has an asymmetric wave form due to the above-mentioned shift. Consequently, the DC component is generated. This DC component reduces the life-time of the liquid crystal, and also generates a flicker and a residual image, thus reducing the quality of display.

To cope with this, a bias voltage is applied to the common electrode (ground) of the liquid crystal cell LCᵢⱼ, for example, to make the effective voltage of the liquid crystal cell LCᵢⱼ symmetric for a positive frame and a negative frame, thus reducing the DC component. In this device, however, since the capacity of the liquid crystal cell has a voltage dependency due to the anisotropy of dielectric characteristics of the liquid crystal cell, the shift voltage Δ V_{lc} fluctuates in accordance with the display state of the liquid crystal cell LCᵢⱼ , and as a result, there is a limit to the effective removal of the DC component by only applying a bias voltage to the common electrode.

As described in the above, in the Japanese Unexamined Patent Publication NOs. 63-96636, 2-214819, 4-14091, 4-14092 and 4-102825, active matrix-type display devices generating no DC component are disclosed.

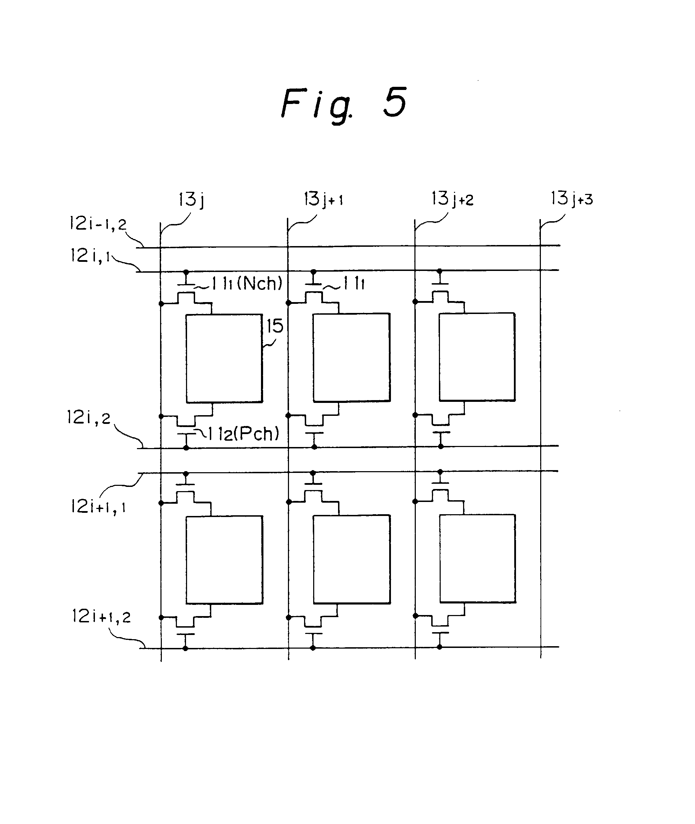

Figure 5 is a circuit diagram illustrating an active matrix-type display device in which no DC component is generated, however, which is different in the detail from those shown in the above documents. As shown in the figure, two scan bus lines 12ᵢ,ⱼ and 12ᵢ,₂ are provided at the upper side and lower side of each row of pixels, and each pixel electrode is connected to the same data bus line via two kinds of TFT 11₁ and 11₂. Nch-type TFTs 11₁ are connected to the upper side scan bus line 12ᵢ,₁, and P-channel-type TFTs 11₂ are connected to the lower side scan bus line 12ᵢ,₂. By applying address pulses having symmetric positive and negative wave forms respectively to the scan bus lines 12ᵢ,₁ and 12ᵢ,₂, two TFTS11₁ and 11₂ are simultaneously turned ON. Since these address pulses have symmetric positive and negative wave forms, the DC component resulting from the parasitic static capacities are cancelled if parasitic static capacities exist between the pixel electrode and two scan bus lines.

As explained in the above with reference to Fig. 1, the scan bus driver 211 only outputs address pulses for turning ON the TFTs. Therefore, the scan bus driver can be realized by a simple construction. Compared to this, the data bus driver 214 outputs the data voltages applied to the pixel cells, and these data voltages are required to have precise amplitudes because the pixel material changes its state according to the applied data voltage. Consequently, the data bus driver is required to output precise voltages compared to the scan bus driver. Further, the shift register of the data bus driver is required to operate at a higher clock rate than that of the scan bus driver because the shift register of the data bus driver operates in synchronization with a clock signal but the shift register of the scan bus driver operates in synchronization with the HSYNC signal.

Further, if the gradation of display is performed, the shift register/latch 215 is required to shift and latches multi-bit data corresponding to the gradation levels, and the number of switches of the data voltage selecting switch array 216 also increases. Therefore, the construction of the data bus driver 214 becomes more complex compared to the scan bus driver 211.

A normal active matrix-type display device has more pixels in the row direction ( horizontal direction), for example, 640 dots × 480 dots. Therefore, the number of data bus drivers is larger than that of scan bus drivers. Further, when a color display is performed, one pixel is preferably composed of three RGB components arranged in the row direction. Consequently, the number of data bus lines is quadruple that of the scan bus lines.

The scan bus lines and the data bus lines are perpendicularly crossed. If the number of data bus lines is much larger than that of scan bus lines, the freedom of the layout of the display panel is limited. As described in the above, since the data bus driver is complex compared to the scan bus driver, the number of data bus lines is required to decrease although the number of scan bus lines increases.

As described in the above, the Japanese Unexamined Patent Publication Nos. 62-218987 and 3-38689 disclose an active matrix-type display device in which the number of data bus lines are reduced. In the display devices disclosed in these documents, two pixel electrodes are respectively connected to the same data bus line via two independently controllable switching elements, and these two switching elements are driven in time division sequences. In these devices, it is important that two switching elements connected to the same data bus line are independently controllable. To cope with this, two scan bus lines are provided, or two kinds of switching elements are used. In this device, the above-mentioned DC component is also generated, and the display quality and the life-time are reduced. Therefore, a device in which the number of data bus lines is reduced and high display quality is obtained is desired.

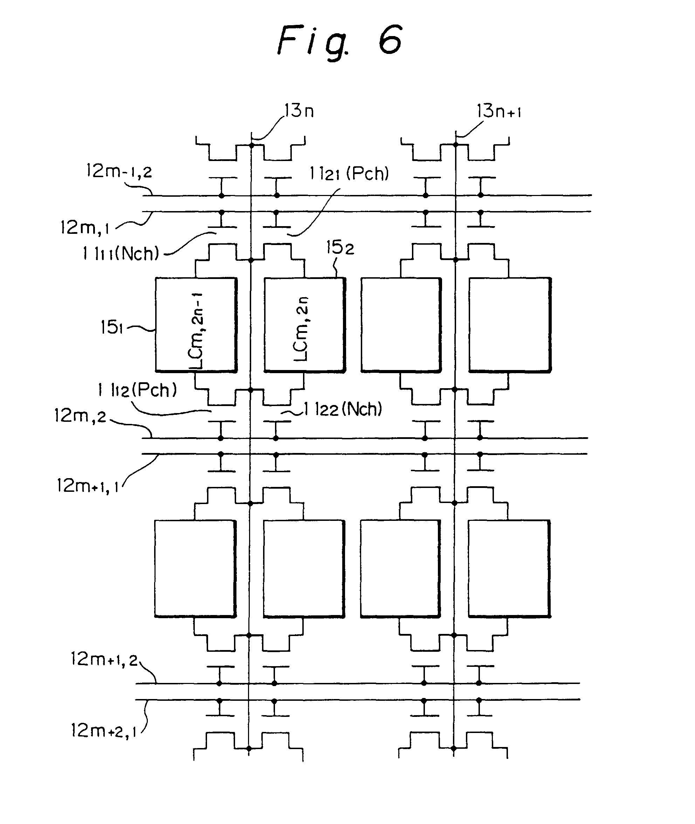

Figure 6 is a circuit diagram illustrating a first embodiment of the active matrix-type display device according to the present invention. This embodiment is a normal type (not counter-matrix type) active matrix-type liquid crystal display device to which the present invention is applied.

As shown in Fig. 6, the active matrix-type liquid crystal display device of this embodiment provides a plurality of pairs of scan bus lines 12ₘ,₁, 12ₘ,₂, 12ₘ₊₁,₁, 12ₘ₊₁,₂, ^{... ...} , a plurality of data bus lines 13ₙ, 13ₙ₊₁, ^{... ...} perpendicularly arranged to the scan bus lines, pixel electrodes 15₁, 15₂, ^{... ...} arranged within pixel areas in a matrix partitioned by the scan bus lines and the data bus lines , and thin film transistors (TFTs) 11₁₁, 11₁₂, 11₂₁, 11₂₂ ^{... ...} connected between the data bus lines 13ₙ, 13ₙ₊₁, ^{...} ^{...} and the pixel electrodes 15₁, 15₂, ^{... ...} . In this embodiment, the above elements are formed on a glass substrate, and a wide spread common electrode is formed on the other glass substrate as counter pixel electrodes. This common electrode is connected to ground. These two glass substrates are arranged in parallel formation, and liquid crystal material is filled between thereof. Liquid crystal cells LCₘ,2ₙ₋₁, LCₘ,₂ₙ are formed by the pixel electrodes with the liquid crystal material.

The TFTs are composed of two kinds such as N-channel N-channel type TFTs and P-channel type TFTs. The type TFT is turned ON when a positive voltage is applied to its control gate, and the P-channel type TFT is turned ON when a negative voltage is applied to its control gate.

As shown in Fig. 6, two scan bus lines such as 12ₘ,₁ and 12ₘ,₂ are provided for one pixel row (a row of pixels arranged in a horizontal direction in Fig. 6), and one line of the pair is arranged at an upper side of the pixel row and the other line is arranged at a lower side of the pixel row. An N-channel type TFT and a P-channel type TFT are connected to each pixel electrode, and both TFTs are connected to the same data bus line. Further, two pixel electrodes are connected to the same data bus line. That is, four TFTs connected to one pixel pair are connected to the same data bus line. And, gates of an N-channel type TFT connected to the first pixel electrode of the pair and a P-channel type TFT connected to the second pixel electrode of the pair are connected to the upper side scan bus line of the pair, and gates of a P-channel type TFT connected to the first electrode of the pixel pair and an N-channel type TFT connected to the second electrode of the pixel pair are connected to the lower side scan bus line of the pair. For example, as shown in Fig. 6, gates of an N-channel type TFT 11₁₁ and P-channel type TFT 11₂₁ are connected to the scan bus line 12ₘ,₁, and gates of a P-channel type TFT 11₁₂ and an N-channel type TFT 11₂₂ are connected to the scan bus line 12ₘ,₂.

By connecting TFTs in this way, two liquid crystal cells of the pixel pair can be independently controlled when two address pulses which compensate each other are applied to two scan bus lines corresponding to the pixel row. This is important for the present invention. In the device of Fig. 5, two scan bus lines are already provided for one pixel row and two different TFTs are also provided for one cell. If two pixel electrodes are connected to each data bus line in the device of Fig. 5, two additional scan bus lines are required for each pixel row in order to access both cells independently. However, in this embodiment, the number of scan bus lines is equal to that of Fig. 5 and any other elements are not increased, although only connections of the TFTs are changed. Further, as explained in the following, the generation of the DC component can also be prevented.

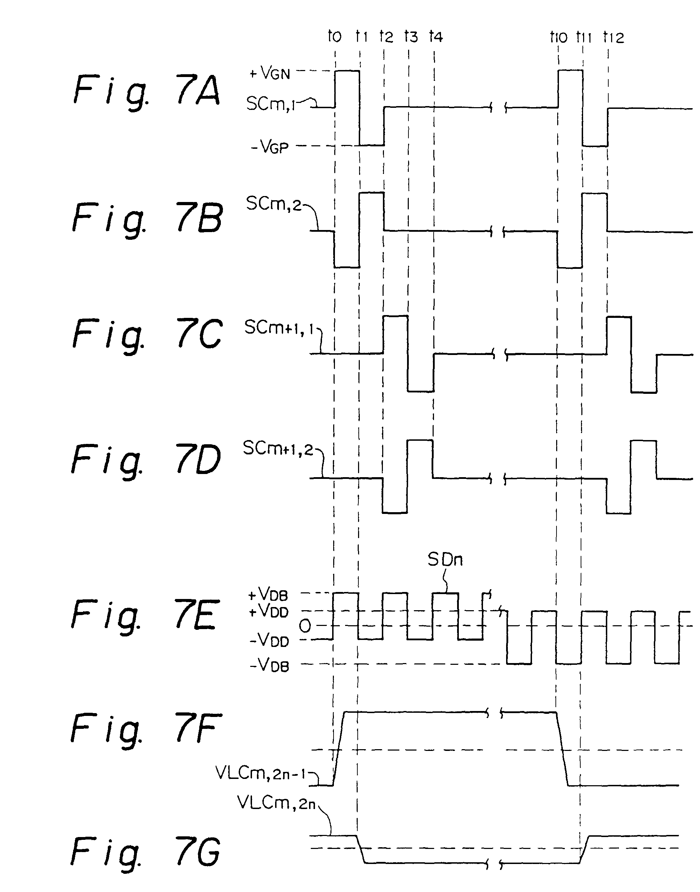

Figures 7A through 7G show the signals of the scan bus lines 12ₘ,₁, 12ₘ,₂, 12ₘ₊₁,₁, 12ₘ₊₁,₂, and data bus lines 13ₙ, 13ₙ₊₁, and the voltages of the liquid crystal cells LCₘ,₂ₙ₋₁, LCₘ,₂ₙ of Fig. 6. SCₘ,₁ designates an address signal applied to the scan bus line 12ₘ,₁ , and SDₙ designates a signal applied to the data bus line 13ₙ, and VLCₘ,₂ₙ₋₁ designates a voltage signal of the cell LCₘ,₂ₙ₋₁.

As shown in Fig. 7A through 7D, two address signals applied to the pair of the scan bus lines such as 12ₘ,₁ and 12ₘ,₂ have opposite polarities to each other, and each of the address pulses is composed of two consecutive positive and negative pulses each having a pulse width being almost a half of one horizontal scanning period (1/2 t _{H} ), and their amplitudes are +V _{GN} and -V _{GP} , respectively. Incidentally, in figures of the signals, the amplitudes of the address pulses are not much larger because of insufficient space, however, in practice, the amplitudes of the address pulses are enough for the TFTs to operate within saturation areas. The cell LCₘ,₂ₙ₋₁ is accessed during time t₀ to time t₁ of Fig. 7A to 7G. When the cell LCₘ,₂ₙ₋₁ is accessed, two address signals as shown in Figs. 7A and 7B are applied to the scan bus line 12ₘ,₁ and the scan bus line 12ₘ,₂. By this, a positive pulse is applied to the control gates of the N-channel type TFT 11₁₁ and the P-channel type TFT₂₁, and a negative pulse is applied to the gates of the P-channel type TFT₁₂ and the N-channel type TFT₂₂. Therefore, the N-channel type TFT₁₁ and the P-channel type TFT₁₂ are turned ON, and the pixel electrode 15₁ is connected to the data bus line 13ₙ . However, the P-channel type TFT 11₂₁ and the N-channel type TFT 11₂₂ are not turned ON. Since the pixel electrode 15₁ is connected to the data bus line 13ₙ, the pixel electrode 15₁ is charged to the potential of the data bus line 13ₙ. As shown in Fig. 7F, the potential of the data bus line 13ₙ is +V_{DB} at this time, therefore, the liquid crystal cell LCₘ,₂ₙ₋₁ is charged to +V_{DB}.

At time t₁, the potential of the scan bus line 12ₘ,₁ changes to negative and the potential of the scan bus line 12ₘ,₂ changes to positive. And then, the N-channel type TFT₁₁ and the P-channel type TFT₁₂ are turned OFF, and the P-channel type TFT 11₂₁ and the N-channel type TFT₂₂ are turned ON. As a result, the pixel electrode 15₁ is cut off from the data bus line 13ₙ, and the charged voltage +V_{DB} is maintained thereafter. At the same time, the pixel electrode 15₂ is connected to the data bus line 13ₙ, and the liquid crystal cell LCₘ,₂ₙ is charged to the potential -V_{DD} . The charging of the liquid crystal cell LCₘ,₂ₙ finishes at time t₂. That is, access to the pixel row including the liquid crystal cells LCₘ,₂ₙ₋₁. LCₘ,₂ₙ finishes from time t₀ through time t₂. Consequently, this period from time t₀ through time t₂ corresponds to the conventional horizontal scanning time t_{H}.

In the next period from time t₂ to t₄, similar address signals are applied to the next pair of scan bus lines 12ₘ₊₁,₁, 12ₘ₊₁,₂. That is, the address signal applied to the next pair is shifted for one horizontal scanning period t_{H}. And then, pairs of the liquid crystal cells of the next row are charged in the same way. In this way, liquid crystal cells of all pixel rows are sequentially charged, and at time t₁₀, the pixel row including the liquid crystal cells LCₘ,₂ₙ₋₁ and LCₘ,₂ₙ are accessed again. From time t₁₀ through time t₁₁, the same address signals as described in the above are applied to the scan bus lines 12ₘ,₁, 12ₘ,₂, and the liquid crystal cells LCₘ,₂ₙ₋₁, LCₘ,₂ₙ are charged to voltages corresponding to the potential of the data bus line 13ₙ. As shown in Fig. 7E, the voltage of the data bus line 13 ₙ is -V _{DB} when the liquid crystal cell LCₘ,₂ₙ₋₁ is accessed, and the voltage of the data bus line 13ₙ is +V _{DD} . Therefore, liquid crystal cells are respectively charged at -V _{DB} and +V _{DD} . In this way, each liquid crystal cell is periodically charged with positive and negative potential for each frame. In the liquid crystal display device designed as normally black mode, large fluctuation voltage corresponds to a bright display. Therefore, since the absolute value of the voltage V_{DD} is larger than the absolute value of the voltage V_{DB}, the liquid crystal cell LCₘ,₂ₙ₋₁ is brighter than the cell LCₘ,₂ₙ . By this data signal, a lattice pattern of bright and dark is displayed. In the display designed as normally white mode, the relation of the brightness is reversed.

As described in the above, when the liquid crystal cell is accessed, the address pulses having opposite polarities are applied to the scan bus lines arranged at both sides of the pixel row, which includes the liquid crystal cell. Each address pulse generates the DC component, however, shift directions of the DC components due to the above two positive and negative address pulses are opposite. Consequently, two DC components operate to cancel each other.

When these two DC components have the same amplitudes, two DC components can be perfectly canceled. As illustrated by the formula (1), an amplitude of a DC component is decided by the parasitic static capacity between the pixel electrode and the scan bus line and the amplitude of the address pulse.

Each of the address signals has a positive pulse of the voltage +V_{GN} and a negative pulse of the voltage -V_{GP}. These voltages +V_{GN} and -V_{GP} are determined so as to satisfy the following relationship:${\text{C}}_{\text{gPN}} {\text{× V}}_{\text{GN}} {\text{= C}}_{\text{gPP}} {\text{× V}}_{\text{GP}}$ where, C_{gPN} is a parasitic electrostatic capacity between the scan bus line such as 12ₘ,₁ and the pixel electrode such as 15₁₁;
C_{gPP} is a parasitic electrostatic capacity between the scan bus line such as 12ₘ,₂ and the pixel electrode such as 15₁₁;

If the above formula is satisfied, the level shift voltage by the N-channel type TFT is canceled by the level shift voltage by the P-channel type TFT. As a result, the total shift voltage becomes zero.

Therefore, if the parasitic static capacities between the pixel electrode and two scan bus lines arranged at both sides of the pixel row are equal, by applying two address pulses having the same amplitudes and polarities opposite both scan bus lines, DC components can be perfectly cancelled. That is, if V_{GN} is equal to V_{GP} in Fig. 7A through 7D, DC components are cancelled.

And, if the above-mentioned two parasitic static capacities are different, the amplitudes of the decided pulses according to the formula (2) may be used. Consequently, by adjusting the ratio of two parasitic static capacities C_{gPN} and C_{gPP} , the potential levels can be freely decided, and the zero level of the address pulses are also changed.

As described in the above, in this embodiment, the number of data bus lines is reduced to half of that of the prior art device and the generation of flickers and residual images and a reduction in the life of the device can be prevented.

Further, in this embodiment, since each liquid crystal cell is controlled by two switching elements, the cell can be controllable when one of switching elements is defective.

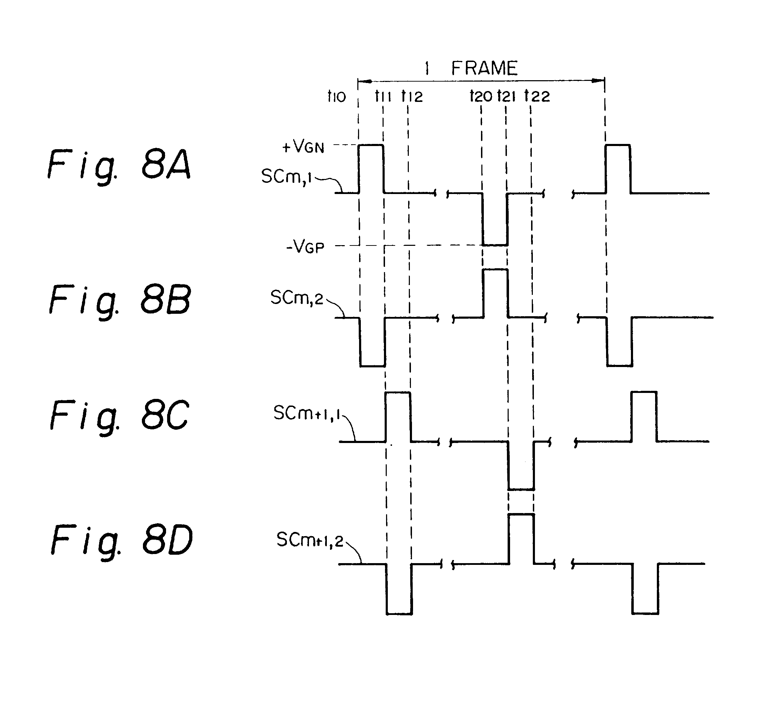

In Fig. 7A through 7D, each of the address signals applied to scan bus lines has two consecutive address pulses of opposite polarity. These two address pulses respectively operate as address pulses for accessing different liquid crystal cells. Therefore, these two address pulses are not required to be consecutive. It is only required that two compensating address pulses are simultaneously applied to two scan bus lines of both sides of a pixel row. Figures 8A through 8D show another address signal of the device of Fig. 6. In Fig. 8A through 8D, the liquid crystal cell LCₘ,₂ₙ₋₁ is accessed from t₁₀ to t₁₁, the liquid crystal cell LCₘ,₂ₙ is accessed from t₂₀ to t₂₁.

In Fig. 7E, the data voltage signal SDₙ applied to the data bus line 13ₙ changes from positive voltage to negative voltage within one horizontal scanning period t_{H} . By this, two liquid crystal cells of the pair are respectively charged to positive and negative. However, the data signal may change for each frame. When the data signal SDₙ changes within positive voltages in one frame and changes within negative voltages in the next frame, all liquid crystal cells are charged to the same polarities in one frame.

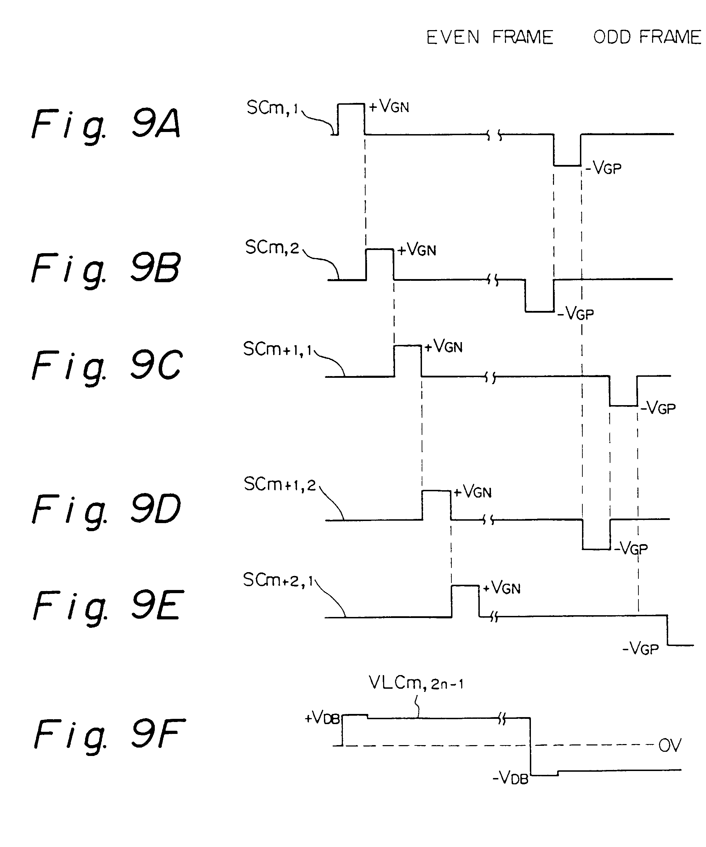

Figures 9A through 9F show another modified example of the address signal and the voltage fluctuation of the liquid crystal cell. As shown in the figures, positive address pulses shifted for a half of one horizontal scanning period (1/2t_{H}) are sequentially applied to the following scan bus lines in the even frame. By these address pulses, liquid crystal cells are accessed in a sequence such as 12ₘ,₁, 12ₘ,₂, 12ₘ₊₁,₁, 12ₘ₊₁,₂, 12ₘ₊₂,₁ ^{... ...} . In the odd frame, negative address pulses are applied. These negative address pulses are also shifted for each pixel row, however, those orders within each pixel row are replaced. For example, a positive address pulse designated by oblique lines of the address signal SCₘ,₁ is before a positive address pulse of the address signal SCₘ,₂ in the even frame, however, a negative address pulse designated by oblique lines of the address signal SCₘ,₁ is after a negative address pulse of the address signal SCₘ,₂ in the odd frame. Address pulses for the liquid crystal cell LCₘ,₂ₙ₋₁ are the positive address pulse of the address signal SCₘ,₁ and the negative address pulse of the address signal SCₘ,₂ which are address pulses designated by oblique lines. Address pulses for the liquid crystal cell LCₘ,₂ₙ are the positive address pulse of the address signal SCₘ,₂ and the negative address pulse of the address signal SCₘ,₁. Therefore, liquid crystal cells are accessed in the same sequence in both even and odd frames.

When the device is driven by the address signal shown in Fig. 9A through 9E, DC components resulting from the address pulses cannot be canceled at that time since positive and negative address pulses are not simultaneously applied. This DC component is shown as a small fluctuation of the cell voltage VLCₘ,₂ₙ₋₁ of Fig. 9F. However, these DC components have opposite directions for each frame. Therefore, by balancing the DC components generated in both even and odd frames, two DC components can be canceled.

In the first embodiment, two thin film transistors (TFTs) having different polarities are connected to one pixel electrode. By this construction, since each liquid crystal cell is driven by two switching elements, the reliability of the device can be increased, and further, two parasitic static capacities between the pixel electrode and two scan bus lines arranged at both sides can be easily balanced. Therefore, two symmetric address pulses having opposite polarity can be applied for cancelling the DC components.

However, the DC component due to parasitic capacitances between the pixel electrode and the scan bus lines is cancelled only by a compensating address pulse applied to the other scan bus line of the opposite side, and the TFT itself, as a switching element, does not directly provide compensation. Therefore, if one pair of TFTs is eliminated from the circuit of Fig. 6, compensation of the DC component can be performed. The second embodiment is an example of this kind.

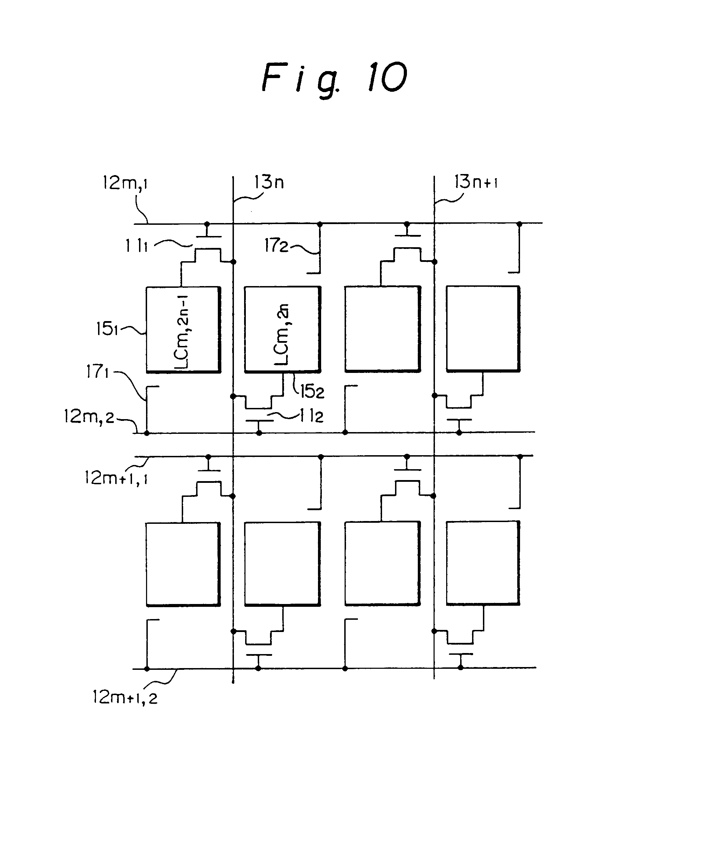

Figure 10 shows a circuit diagram of the second embodiment.

As shown in Fig. 10, the device of the second embodiment provides a plurality of pairs of two scan bus lines 12ₘ,₁, 12ₘ,₂, 12ₘ₊₁,₁, 12ₘ₊₁,₂, ^{... ...} , a plurality of data bus lines 13ₙ, 13ₙ₊₁,^{... ...} perpendicularly arranged to the scan bus lines, a plurality of pixel electrodes arranged in a matrix, and a plurality of thin film transistors (TFTs). One TFT is provided for one pixel electrode, and these TFTs operate by signals having the same polarity. In this embodiment, all TFTs are the N-channel type. Further, auxiliary lines 17₁, 17₂^{... ...} are provided. These elements are formed on one glass substrate, and a common electrode operating as a counter pixel electrode is formed on the other glass substrate. These two glass substrates are arranged in parallel formation, and liquid crystal material is filled between them. Liquid crystal cells LCₘ,₂ₙ₋₁, LCₘ,₂ₙ ^{... ...} are formed between the pixel electrodes.

Two scan bus lines 12ₘ,₁, 12ₘ,₂ are provided for one pixel row, and one scan bus line 12ₘ,₁ is at the upper side of the pixel row, and the other scan bus line 12ₘ,₂ is at the lower side of the pixel row. Two liquid crystal cells LCₘ,₂ₙ₋₁, LCₘ,₂ₙ make a pair, and two pixel electrodes 15₁, 15₂ of the pair of the liquid crystal cells are connected to the same data bus line 13ₙ via TFT 11₁ and TFT 11₂. A control gate of the TFT 11₁ is connected to the scan bus line 12ₘ,₁, and a control gate of the TFT 11₂ is connected to the scan bus line 12ₘ,₂.

The auxiliary lines 17₁, 17₂ ^{... ...} are lines elongated from the scan bus lines to the pixel electrodes. The auxiliary line 17₁ elongates from the lower side scan bus line 12ₘ,₂ to the pixel electrode 15₁, and the auxiliary line 17₂ elongates from the upper side scan bus line 12ₘ,₁ to the pixel electrode 15₂. By the auxiliary lines, static capacities exist between the pixel electrodes and the scan bus lines. For increasing the static capacities between the pixel electrodes and the scan bus lines, other methods, for example, to form overlapped portions between the pixel electrodes and the scan bus lines, are available.

Compared with Fig. 6, excepting the auxiliary lines, the circuit of Fig. 10 is equal to that of Fig. 6 from which P-channel type TFTs are eliminated. Further, this circuit is similar to that disclosed in a figure of the above-mentioned Japanese Unexamined Patent Publication 3-38689, which is an invention for reducing the number of data bus lines.

In the circuit of Fig. 10, when the voltages of the address pulses are decided according to the ratio of the parasitic static capacities between each pixel electrode and two scan bus lines of both sides, DC components can be cancelled by applying address signals of Figs. 7A through 7D. In a duration from t₀ to t₁, a positive pulse of the address signal SCₘ,₁ is applied to the scan bus line 12ₘ,₁, and the TFT 11₁ conducts. At this time, since a negative pulse of the address signal SCₘ,₂ is applied to the scan bus line 12ₘ,₂, a DC component generated by the positive pulse is canceled by the negative pulse. The TFT 11₂ does not conduct due to this negative pulse since the TFT 11₂ is an N-channel TFT. Therefore, only the liquid crystal cell LCₘ,₂ₙ₋₁ is accessed in this duration.

In a next duration from t₀ to t₁, a positive pulse of the address signal SCₘ,₂ is applied to the scan bus line 12ₘ,₂, and the TFT 11₂ conducts At this time, the negative pulse on the scan bus line 12ₘ,₁ cancels the the DC component generated by the positive pulse on the scan bus line 12₂. The TFT 11₁ does not conduct during this duration, and only the liquid crystal cell LCₘ,₂ₙ is accessed.

Liquid crystal cells of the following pixel rows are similarly accessed.

In this second embodiment, liquid crystal cells are accessed only by positive pulses, and negative pulses are only for compensation. And, similarly to the first embodiment, two positive and negative pulses are not required to be consecutive.

Address signal of Fig. 9A through 9E can be applied in the first embodiment, but cannot be applied in the second embodiment.

In Fig. 10, auxiliary lines 17₁, 17₂ ^{... ...} are provided for adjusting the parasitic static capacity between the pixel electrode and the scan bus line to which the pixel is not connected. That is, the auxiliary line 17₁ increases the parasitic static capacity between the pixel electrode 15₁ and the lower side scan bus line 12ₘ,₂, and the auxiliary line 17₁ increases the parasitic static capacity between the pixel electrode 15₂ and the upper side scan bus line 12ₘ,₁. Therefore, the voltage of the negative pulse for compensation can be reduced. As described in the above, since the negative pulses operate only as compensation pulses, it is good that these amplitudes are small. Further, the base level of the address pulses can be shifted to the negative. By this, the N-channel TFTs operate more stably.

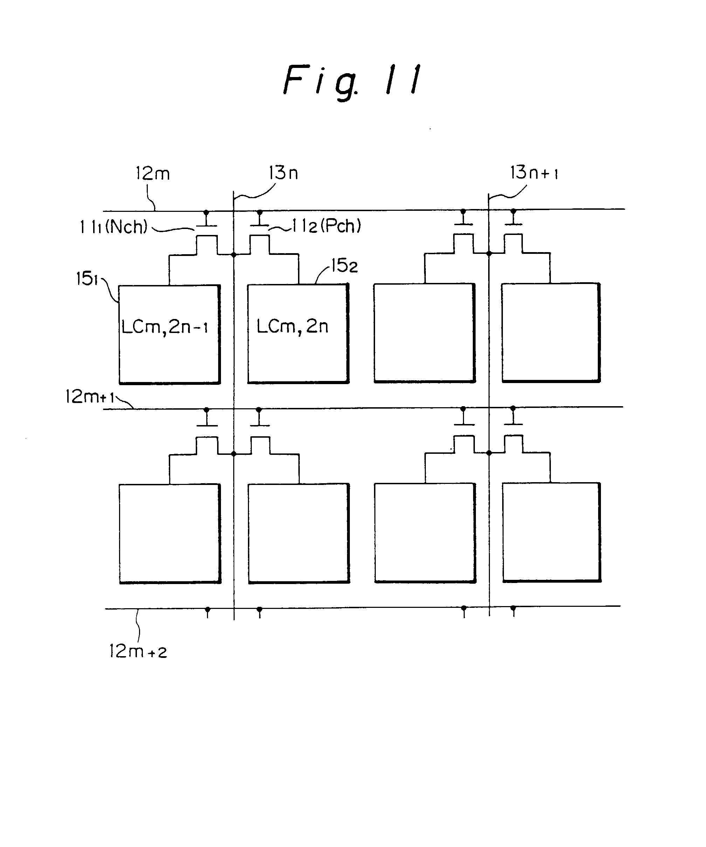

Figure 11 shows a circuit diagram of the third embodiment.

As shown in Fig. 11, the device of the third embodiment provides a plurality of scan bus lines 12ₘ, 12ₘ₊₁,^{... ...} , a plurality of data bus lines 13ₙ, 13ₙ₊₁, ^{... ...} perpendicularly arranged to the scan bus lines, a plurality of pixel electrodes arranged in a matrix, and a plurality of thin film transistors (TFTs). In this embodiment, the TFTs are composed of N-channel type TFTs and P-channel type TFTs. For example, the TFT 11₁ is an N-channel type TFT, and the TFT 11₂ is a P-channel type TFT. These elements are formed on one glass substrate, and a common electrode operating as counter pixel electrodes is formed on the other glass substrate. These two glass substrates are arranged in parallel formation, and liquid crystal material is filled between them. Liquid crystal cells LCₘ,₂ₙ₋₁, LCₘ,₂ₙ ^{... ...} are formed between the pixel electrodes.

One scan bus line 12ₘ is provided for each pixel row, and this scan bus line 12ₘ is arranged at the upstream side of the scanning direction. Two liquid crystal cells LCₘ,₂ₙ₋₁, LCₘ,₂ₙ make a pair, and two pixel electrodes 15₁, 15₂ of the pair of the liquid crystal cells are connected to the same data bus line 13ₙ via TFT 11₁ and TFT 11₂. Both control gates of the TFTs 11₁, 11₂ are connected to the scan bus line 12ₘ.

Compared with Fig. 6, the circuit of Fig. 11 is equal to that of Fig. 6 from which scan bus lines of the lower side and pairs of TFTs connected to the scan bus lines of the lower side are eliminated. Further, this circuit is the circuit disclosed in a figure of the above-mentioned Japanese Unexamined Patent Publication 62-218987, which is an invention for reducing the number of data bus lines.

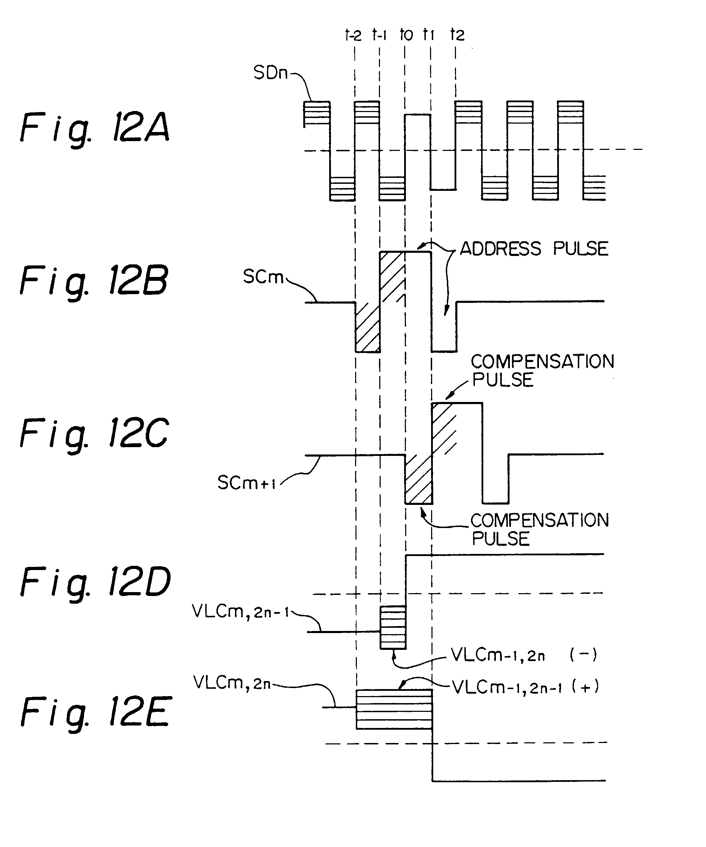

Figures 12A through 12E show a data signal SDₙ applied to the data bus lines 13ₙ, address signals SCₘ, SCₘ₊₁ applied to the scan bus lines 12ₘ, 12ₘ₊₁, and the voltages VLCₘ,₂ₙ₋₁, VLCₘ,₂ₙ of the liquid crystal cells LCₘ,₂ₙ₋₁, LCₘ,₂ₙ of Fig. 11.

As shown in Figs. 12B and 12C, each of the address signals applied to each scan bus line such as 12ₘ, 12ₘ₊₁ are composed of two portions of address pulses and compensation pulses. The portion of the compensation pulses is designated by oblique lines. The address pulses are composed of two positive and negative pulses. The negative pulse is delayed by a half of one horizontal scanning period (1/2 t_{H}) from the positive pulse. The N-channel TFT 11₁ is turned ON by the positive pulse, and the P-channel TFT 11₂ is turned ON by the negative pulse. Therefore, the liquid crystal cell LCₘ,₂ₙ₋₁ from t₀ to t₁, and the liquid crystal cell LCₘ,₂ₙ from t₁ to t₂. During the same duration, the compensation pulses are applied to the scan bus line 12ₘ₊₁ of the downstream side. These compensation pulses are composed of a negative compensation pulse and positive compensation pulse. The negative compensation pulse applied from t₀ to t₁ cancels the DC component generated by the positive address pulse of the scan bus line 12ₘ , the positive compensation pulse applied from t₁ to t₂ cancels the DC component generated by the negative address pulse of the scan bus line 12ₘ . Therefore, the compensation pulses need to be added before the address pulses. The compensation pulses of the address signal SCₘ applied to the scan bus line 12ₘ cancel the DC components generated by address pulses of a scan bus line 12 ₘ₋₁.

However, TFTs are also turned ON by these compensation pulses. That is, the negative compensation pulse applied to the scan bus line 12ₘ turns the P-channel TFT 11₂, and the positive compensation pulses applied to the scan bus line 12ₘ turns the N-channel TFT 11₁. When the negative compensation pulse is applied to the scan bus line 12ₘ from t₋₂ to t₋₁, a data voltage charged to the liquid crystal cell LCₘ₋₁,₂ₙ₋₁ is applied to the data bus line 13ₙ. Therefore, the liquid crystal cell LCₘ,₂ₙ is charged to this voltage. This voltage of the liquid crystal cell LCₘ,₂ₙ is maintained until the TFT 11₂ is turned ON again, i.e., t₁. Similarly, the liquid crystal cell LCₘ,₂ₙ₋₁ is charged to a voltage of the liquid crystal cell LCₘ₋₁,₂ₙ from t₋₁ to t₀, and is recharged from t₀ to t₁. Figures 12D and 12E show voltage variations owing to these operations.

The voltages temporarily charged by the compensation pulses have no relation to formal voltages. Therefore, the display contents of the liquid crystal cells are influenced by the display contents of the forward pixel rows. However, the durations in which informal voltages are charged are less than 3/2 t_{H} at maximum. Active matrix-type liquid crystal display panels for a personal computer, etc. usually provide four hundred, or more pixel rows. Consequently, the ratio of the duration in which informal voltages are applied is less than 0.4% at maximum, and there is no problem in practical use.

Embodiments explained in the following are counter-matrix type devices according to the present invention.

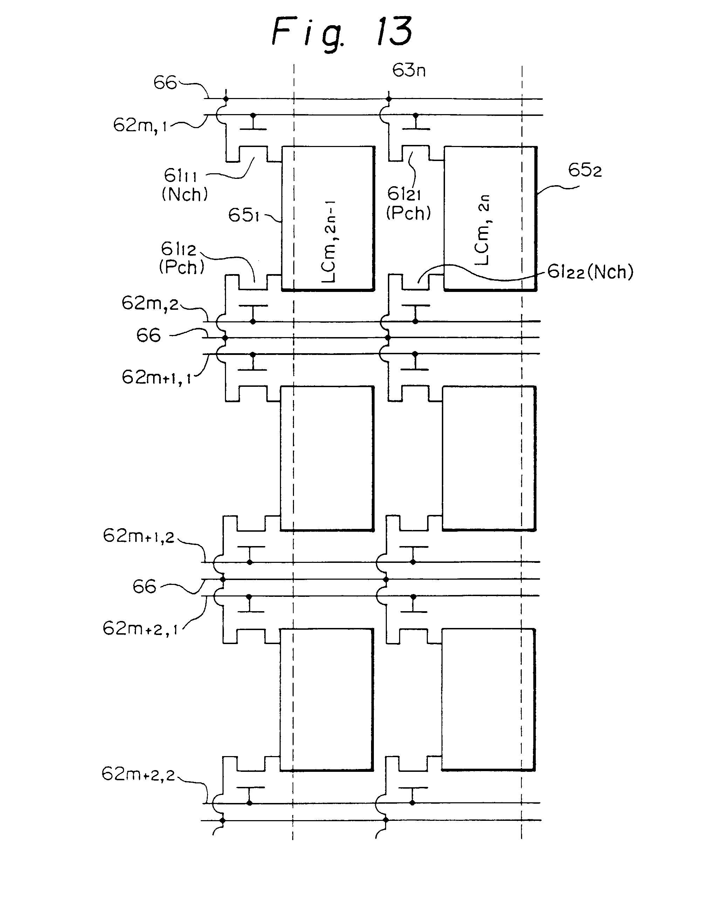

Figure 13 shows a circuit diagram of a fourth embodiment of the counter-matrix-type display device according to the present invention. This embodiment corresponds to the counter-matrix-type device of the first embodiment.

AS shown in Fig. 13, the active matrix-type liquid crystal display device of this embodiment provides a plurality of pairs of scan bus lines 62ₘ,₁, 62ₘ,₂, 62ₘ₊₁,₁, 62ₘ₊₁,₂, ^{... ...} and a plurality of data bus lines 63ₙ,^{... ...} arranged perpendicularly to each other on different glass substrates having liquid crystal material filled therebetween. Also, pixel electrodes 65₁, 65₂, ^{... ...} are arranged within pixel areas in a matrix which is partitioned by the scan bus lines and which faces the data bus lines .

Further, reference voltage supply lines 66, which are in this case grounded GND, are arranged parallel with the scan bus lines 62ₘ,₁, 62ₘ,₂, 62ₘ₊₁,₁, 62ₘ₊₁,₂,^{... ...} . These reference voltage supply lines are surrounded by two scan bus lines belonging to different pixel rows.

Liquid crystal cells LCₘ,₂ₙ₋₁, LCₘ,₂ₙ, ^{... ...} are formed by the pixel electrodes and the data bus lines with liquid crystal material.

In order to control each of the liquid crystal cells LCₘ,₂ₙ₋₁, LCₘ,₂ₙ, ^{... ...} , two kinds of thin film transistors (TFTs) 61₁₁, 61₁₂, 61₂₁, 61₂₂, i.e., an N-channel type TFT and a P-channel type TFT are provided for each liquid crystal cell. The N-channel type TFT is turned ON when a positive voltage is applied to its control gate, and the P-channel type TFT is turned ON when a negative voltage is applied to its control gate.

As shown in Fig. 13, two scan bus lines such as 62ₘ,₁ and 62ₘ,₂ are provided for each pixel row (a row of pixels arranged in horizontal direction in Fig. 13), and one line of the pair is arranged at the upper side of the pixel row and other line is arranged at the lower side of the pixel row. An N-channel type TFT and a P-channel type TFT are connected to each pixel electrode, and both TFTs are connected to the reference voltage supply lines. Further, two pixel electrodes are arranged to face the same data bus line. And, gates of an N-channel type TFT connected to the first pixel electrode of the pixel pair and a P-channel type TFT connected to the second side electrode of the pixel pair are connected to the upper scan bus line of the pair, and gates of a P-channel type TFT connected to the first electrode of the pixel pair and an N-channel type TFT connected to the second electrode of the pixel pair are connected to the lower side scan bus line of the pair. For example, as shown in Fig. 6, gates of an N-channel type TFT 11₁₁ and P-channel type TFT 11₂₁ are connected to the scan bus line 12ₘ,₁, and gates of a P-channel type TFT 11₁₂ and an N-channel type TFT 11₂₂ are connected to the scan bus line 12ₘ,₂.

By connecting TFTs in this way, two liquid crystal cells of the pixel pair can be independently controlled when two mutually compensatable address pulses are applied to two scan bus lines corresponding to the pixel row.

In the device of the fourth embodiment, the same signals as illustrated in Figs. 7A through 7G, 8A through 8G and 9A through 9F are available, and the same effects are obtained.

In the counter-matrix-type device, since the data bus lines operate as the counter pixel electrodes, potential fluctuations of the data bus lines influence the voltages of the liquid crystal cells via parasitic static capacities. As shown in Figs. 7E, 8E, the potentials of the data bus lines fluctuate at twice the extent of the data voltages. Since the influence of the potential fluctuations of the data bus lines is proportional to those amplitudes, the amplitudes of the potentials of the data bus lines are preferably small. In order to accomplish this, a device in which the potential of the reference voltage supply line is changed in synchronization with the data signal is proposed.

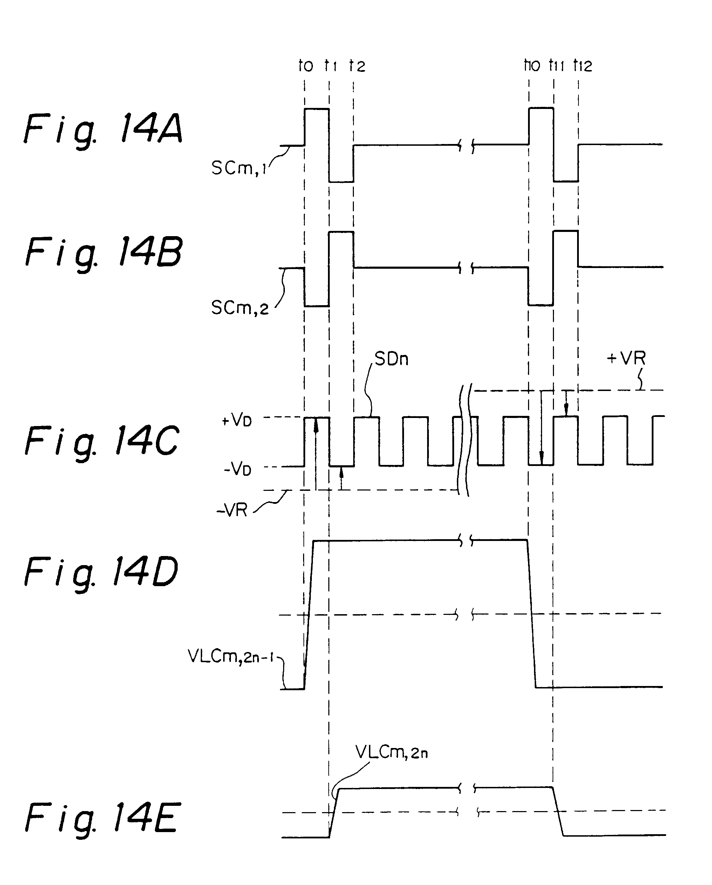

Figs. 14A through 14E show the signals of the device of Fig. 13 in which the potential of the reference voltage supply lines 66 fluctuates.

As shown in Figs. 14A and 14B, the same address signals SCₘ,₁, SCₘ,₂ of Figs. 7A and 7B are respectively applied to the scan bus lines 62ₘ,₁ and 62ₘ,₂. In Fig. 14C, SDₙ designates the data signal, and -VR and +VR designate the levels of potentials of the reference voltage supply lines. In this case, the potential of the reference voltage supply lines changes in synchronization with a frame signal.

In the duration from t₀ to t₁, the liquid crystal cell LCₘ,₂ₙ₋₁ is accessed. In this duration, the potential of the data bus line 63ₙ is +VD, and the potential of the reference voltage supply lines 66 is -VR. The difference between the potentials of the reference voltage supply lines 66 and the data bus line 63ₙ is charged to the liquid crystal cell LCₘ,₂ₙ₋₁. VLCₘ,₂ₙ₋₁ of Fig. 14D designates the potential of the liquid crystal cell LCₘ,₂ₙ₋₁. In this duration, the liquid crystal cell LCₘ,₂ₙ₋₁ is charged to (+VD+VR), which is a large positive value.

In the next duration from t₁ to t₂, which is delayed by a half of one horizontal scanning period, the liquid crystal cell LCₘ,₂ₙ is accessed. In this duration, the potential of the data bus line 63ₙ is -VD, and the potential of the reference voltage supply lines 66 is also -VR. The difference between the potentials of the reference voltage supply lines 66 and the data bus line 63ₙ is charged to the liquid crystal cell LCₘ,₂ₙ. VLCₘ,₂ₙ of Fig. 14E designates the potential of the liquid crystal cell LCₘ,₂ₙ . In this duration, the liquid crystal cell LCₘ,₂ₙ is charged to (-VD+VR), which is a small positive value.

After one frame cycle, in the duration from t₁₀ to t₁₁, the liquid crystal cell LCₘ,₂ₙ₋₁ is accessed again. In this duration, the potential of the data bus line 63ₙ is -VD, and the potential of the reference voltage supply lines 66 is +VR. The difference between the potentials of the reference voltage supply lines 66 and the data bus line 63ₙ is charged to the liquid crystal cell LCₘ,₂ₙ₋₁. In this duration, the liquid crystal cell LCₘ,₂ₙ₋₁ is charged to (-VD-VR), which is a large negative value.

In the next duration from t₁₁, to t₁₂, which is delayed by a half of one horizontal scanning period, the liquid crystal cell LCₘ,₂ₙ is accessed. In this duration, the potential of the data bus line 63ₙ is +VD, and the potential of the reference voltage supply lines 66 is +VR. The difference between the potentials of the reference voltage supply lines 66 and the data bus line 63ₙ is charged to the liquid crystal cell LCₘ,₂ₙ . In this duration, the liquid crystal cell LCₘ,₂ₙ is charged to (+VD-VR), which is a small negative value.

In this case, a lattice pattern of bright and dark lines are displayed by the data signal of Fig. 14C.

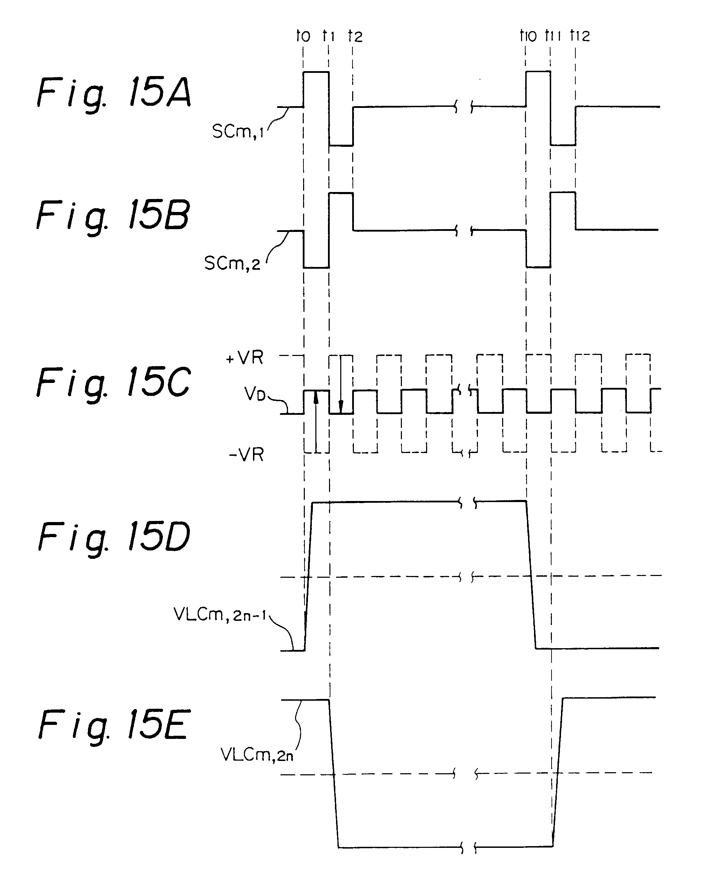

Fig. 15A through 15E show another example of signals of the fourth embodiment in which the potential of the reference voltage supply lines 66 are changed. In this case, a bright monotone pattern is displayed. The potential of the reference voltage supply lines 66 is changed by a half of one scanning period (1/2t_{H} ). Since polarities of the voltages of the liquid crystal cells are decided by the direction from the potential of the reference to the potential of the data signal, in one frame, two neighboring cells are charged to different polarities.

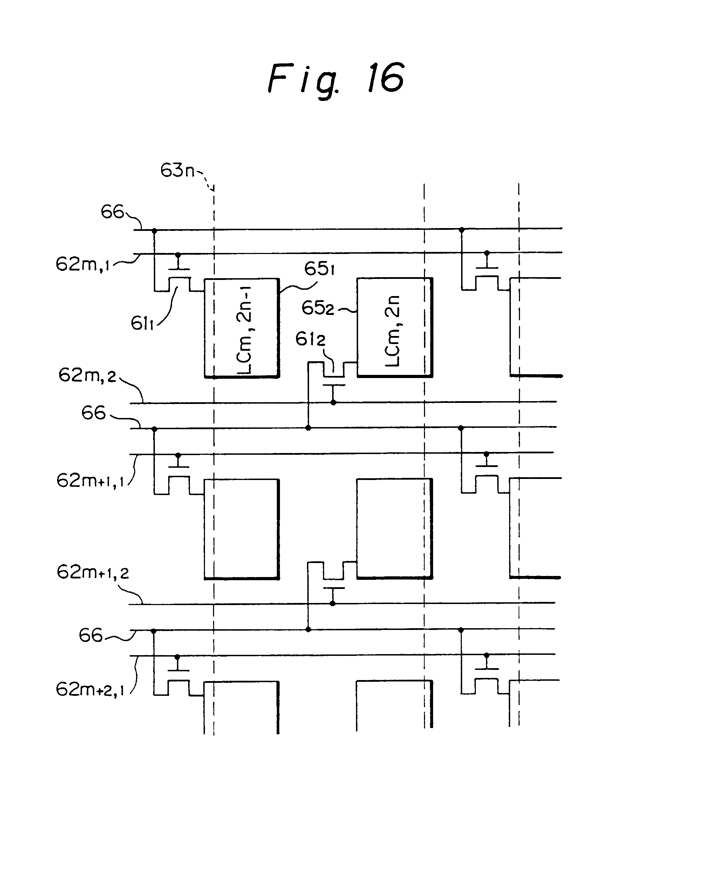

Figure 16 shows a circuit diagram of a fifth embodiment, that corresponds to the counter-matrix-type device of the second embodiment, excepting auxiliary lines.

AS shown in Fig. 16, the active matrix-type liquid crystal display device of this embodiment provides a plurality of pairs of scan bus lines 62ₘ,₁, 62ₘ,₂, 62ₘ₊₁,₁, 62ₘ₊₁,₂, ^{... ...} and a plurality of data bus lines 63ₙ,^{... ...} arranged perpendicularly to each other on different glass substrates having liquid crystal material filled therebetween. Also, pixel electrodes 65₁, 65₂, ^{... ...} are arranged within pixel areas in a matrix which is partitioned by the scan bus lines and which face the data bus lines.

Further, reference voltage supply lines 66, which are in this case grounded GND, are arranged parallel with the scan bus lines 62ₘ,₁, 62ₘ,₂, 62ₘ₊₁,₁, 62ₘ₊₁,₂, ^{... ...} . Each of reference voltage supply lines are surrounded by two scan bus lines belonging to different pixel rows.

Liquid crystal cells LCₘ,₂ₙ₋₁, LCₘ,₂ₙ, ^{... ...} are formed by the pixel electrodes and the data bus lines with liquid crystal material.

In order to control each of the liquid crystal cells LCₘ,₂ₙ₋₁, LCₘ,₂ₙ, ^{... ...} , thin film transistors (TFTs) 61₁, 61₂ are provided for each liquid crystal cell, and these TFTs operate by signals having the same polarity. In this embodiment, all TFTs are the N-channel type.

Two scan bus lines 62ₘ,₁, 62ₘ,₂ are provided for each pixel row, and one scan bus line 62ₘ,₁ is at the upper side of the pixel row, and the other scan bus line 62ₘ,₂ is at the lower side of the pixel row. Two liquid crystal cells LCₘ,₂ₙ₋₁, LCₘ,₂ₙ make a pair, and two pixel electrodes 65₁, 65₂ of the pair of the liquid crystal cells are connected to the reference voltage supply bus line 66ₙ via TFT 61₁ and TFT 61₂. A control gate of the TFT 61₁ is connected to the scan bus line 62ₘ,₁, and a control gate of the TFT 61₂ is connected to the scan bus line 62ₘ,₂.

In the device of the fifth embodiment, the same signals as illustrated in Figs.7A through 7G, 8A through 8G, 14A through 14E, and 15A through 15E are available, and the same effects as in the second embodiment are obtained.

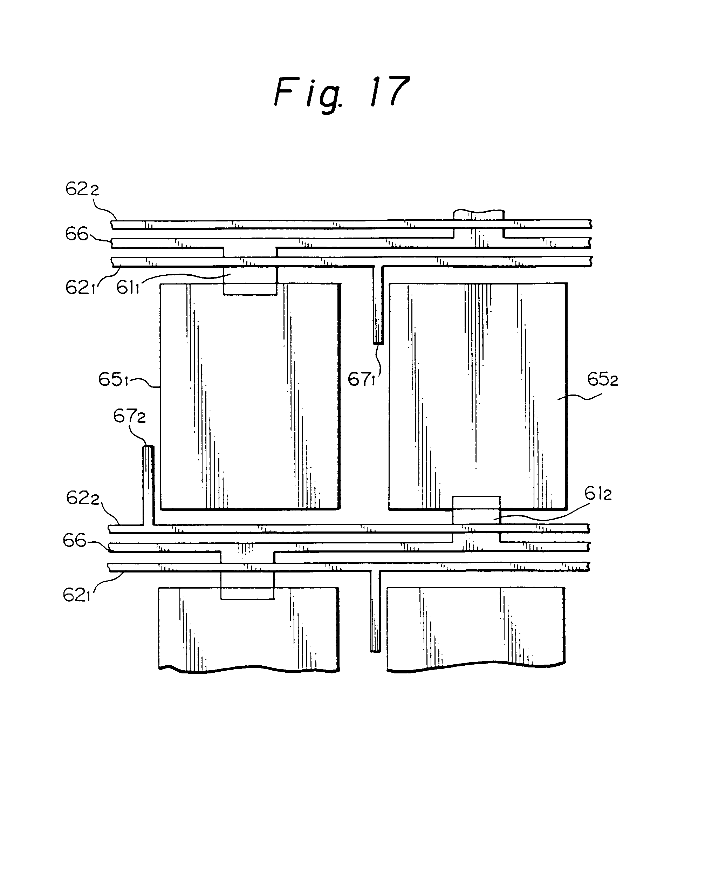

The device of the second embodiment provides auxiliary lines elongated from the scan bus lines to the pixel electrodes. The device of the fifth embodiment can also provide auxiliary lines. Figure 17 shows an example of auxiliary lines 67₁, 67₂ in the device of the fifth embodiment. The auxiliary line 67₁ elongates from the upper side scan bus line 12ₘ,₁ to the pixel electrode 65₂, and the auxiliary line 67₂ elongates from the lower side scan bus line 12ₘ,₂ to the pixel electrode 15₁.

It is already described that, in a counter-matrix-type device, the potential of the reference voltage supply lines can fluctuate for reducing the influences of the potential fluctuations of the data bus lines. Figures 14A through 14E and 15A through 15E show the operations when the potential of the reference voltage supply lines fluctuates. However, this voltage fluctuation of the reference voltage supply lines also influences display conditions of the liquid crystal cells. In the following embodiment, this problem will be solved.

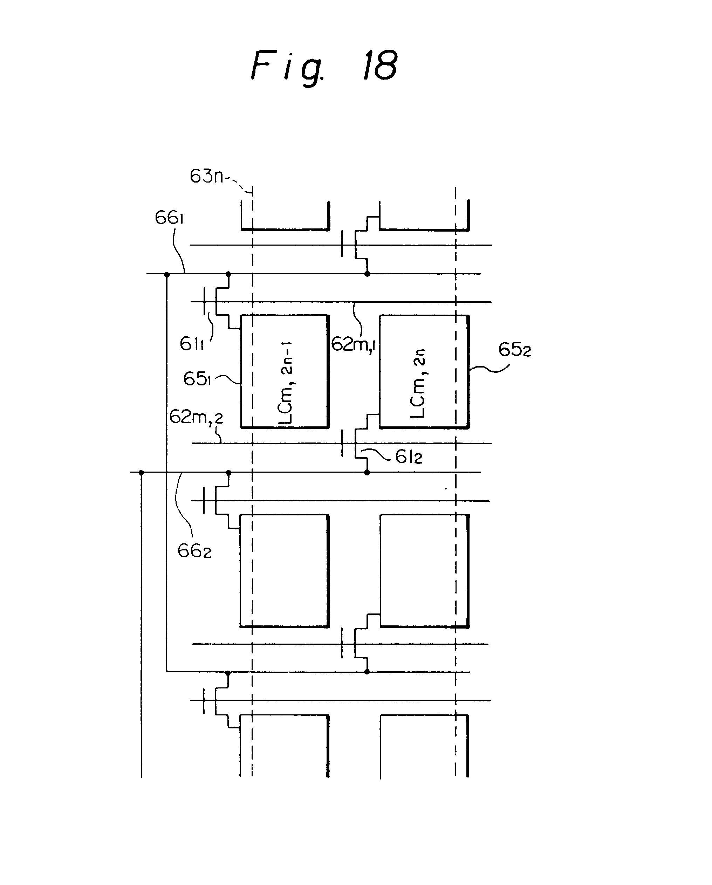

In Fig. 18, which is a sixth embodiment of the counter-matrix-type display device according to the present invention, the device of Fig.16 is modified. That is, the reference voltage supply lines 66 are alternately divided into two kinds of lines 66₁ and 66₂. Reference voltage supply lines including each kind are connected at their ends and two different voltage signals are respectively applied.

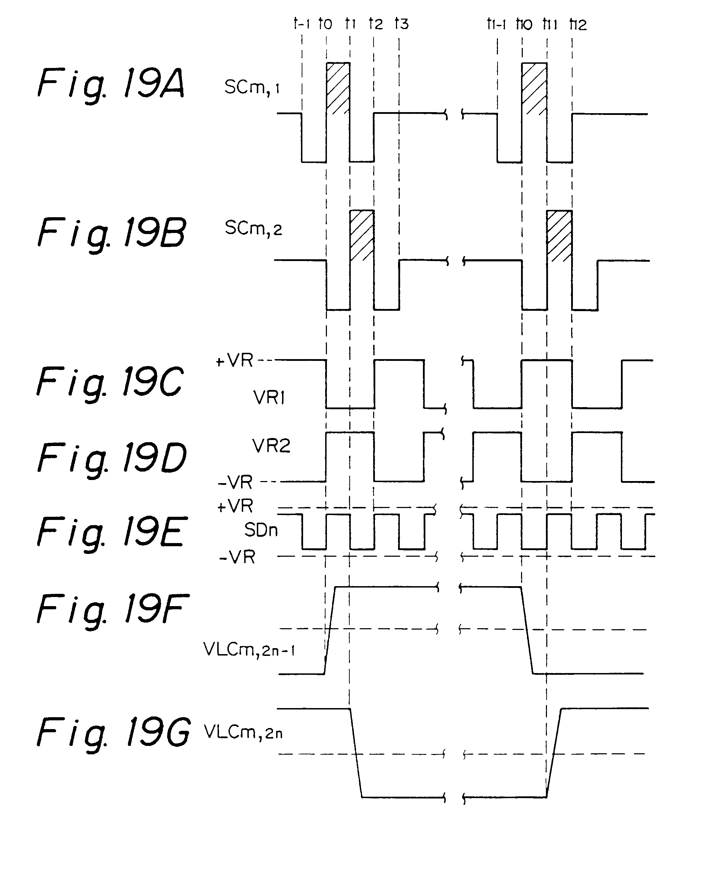

Figures 19A through 19G show address signals SCₘ,₁ applied to the scan bus lines 62ₘ,₁, a data signal SDₙ applied to the data bus line 63ₙ, potential signals VR1, VR2 applied to the reference voltage supply lines 66₁, 66₂, and the voltages VLCₘ,₂ₙ₋₁, VLCₘ,₂ₙ of the liquid crystal cells LCₘ,₂ₙ₋₁, LCₘ,₂ₙ of Fig. 18.

The address signal SCₘ,₁, SCₘ,₂ of Figs. 19A and 19B are the signals of Figs. 7A and 7B to which extra compensation pulses are added. The negative pulse of the address signal SCₘ,₁ from t₋₁ to t₀ and the negative pulse of the address pulse SCₘ,₂ from t₂ to t₃ correspond to these extra compensation pulses. From t₋₁ to t₀, the pixel row including the liquid crystal cells LCₘ,₂ₙ₋₁, LCₘ,₂ₙ is not accessed, but the adjacent pixel row at upper side of this pixel row is accessed. Therefore, the positive address pulses are applied to the lower side scan bus line of this upper side pixel row, and this extra compensation pulse of the signal SCₘ,₁ compensates this address pulse. Of course, at this time, the compensation pulse is applied to the upper side scan bus line of this upper side pixel row, and this compensation pulse and the extra compensation pulse jointly compensate for the address pulse. Similarly, the extra compensation pulse of the signal SCₘ,₂ compensates for the address pulse applied to the scan bus line of the lower side pixel row. Thereby, the amplitude of each compensation pulse can be reduced. These extra compensation pulses can be available in the second and fifth embodiments.

Further, as shown in Figs. 19C and 19D, the voltage signals VR1 and VR2 applied to the reference voltage supply lines 66₁ and 66₂ are in synchronization and have opposite polarity. When the data signal applied to the data bus line 63 ₙ , the voltages VLCₘ,₂ₙ₋₁, VLCₘ,₂ₙ of the liquid crystal cells LCₘ,₂ₙ₋₁, LCₘ,₂ₙ change as in Figs. 19F and 19G, and since the potentials of the reference voltage supply lines fluctuate as in Figs. 19C and 19D, the influences of these fluctuations can be reduced.

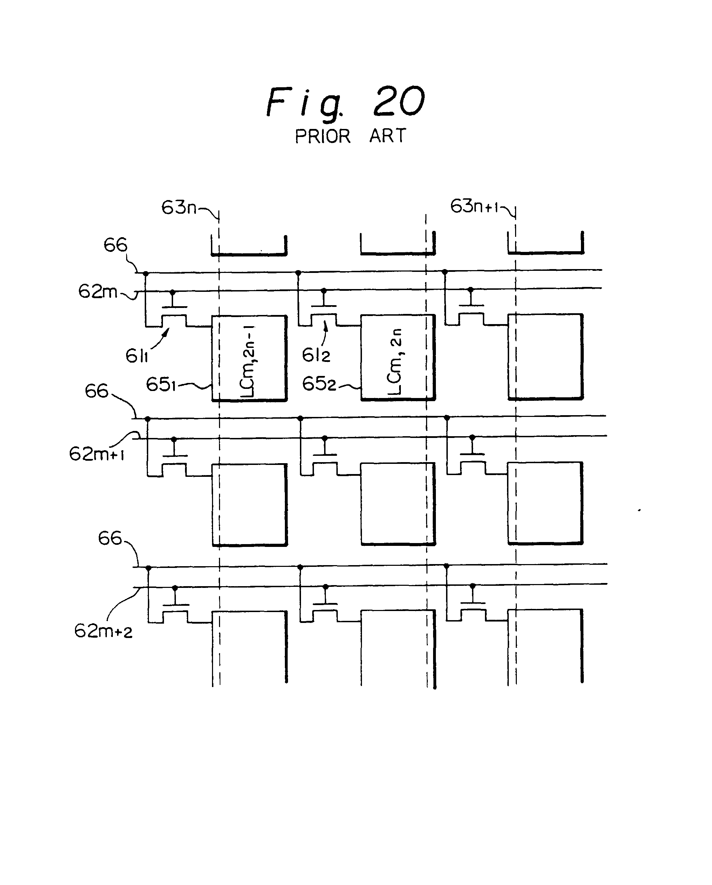

Figure 20 shows a circuit diagram of a fourth embodiment of the counter-matrix-type display device according to the present invention. This embodiment corresponds to the counter-matrix-type device of the third embodiment, and this circuit is same to that disclosed in a figure of the Japanese Unexamined Patent Publication No.2-2135318.

AS shown in Fig. 20, the active matrix-type liquid crystal display device of this embodiment provides a plurality of scan bus lines 62ₘ, 62ₘ₊₁, ^{... ...} and a plurality of data bus lines 63ₙ,^{... ...} arranged perpendicularly to each other on different glass substrates having liquid crystal material filled therebetween. Also, pixel electrodes 65₁, 65₂, ^{... ...} are arranged within pixel areas in a matrix which are partitioned by the scan bus lines and which face the data bus lines . Further, reference voltage supply lines 66 are arranged parallel with the scan bus lines.

Liquid crystal cells LCₘ,₂ₙ₋₁, LCₘ,₂ₙ, ^{... ...} are formed by the pixel electrodes and the data bus lines with liquid crystal material.

In order to control each of the liquid crystal cells LCₘ,₂ₙ₋₁, LCₘ,₂ₙ, ^{... ...} , there are two kinds of thin film transistors (TFTs) 61₁, 61₂, ^{... ...} In this embodiment, the TFTs are composed of N-channel type TFTs and P-channel type TFTs. For example, the TFT 61₁ is an N-channel type TFT, and the TFT 61₂ is a P-channel type TFT.

One scan bus line 62ₘ is provided for each pixel row, and this scan bus line 62ₘ is arranged at the upstream side of the pixel row of the scanning direction. Two liquid crystal cells LCₘ,₂ₙ₋₁, LCₘ,₂ₙ make a pair, and two pixel electrodes 65₁, 65₂ of the pair of the liquid crystal cells are arranged so as to face to the same data bus line 63ₙ. Both control gates of the TFTs 61₁, 61₂ are connected to the scan bus line 62ₘ.

In the device of the seventh embodiment, the same signals as illustrated in Figs. 12A through 12C are available, and the same effects are obtained.

In the above-mentioned embodiments, liquid crystal material is used as an electro-optic element, however, an electroluminescence element, an electrochromic element, and the like can also be used. Various configurations, shape, material, and the like can be used for the above-mentioned active-type liquid crystal panel.

As will now be apparent there is provided an active matrix-type display device having rows of pixel electrodes connected to scan bus lines and data bus lines and wherein each scan bus line is connected to a row of pixel electrodes and each data bus line is connected to two columns of pixel electrodes through at least one switching element to each electrode, the or one switching element for each electrode being controlled by the or one scan bus line for the row and wherein the control signal asserted on the scan bus line to operate the switching element is compensated by a subsequent signal on the same scan bus line or by a signal on another scan bus line for the row so as substantially to leave no residual DC level on the row.

As described above, according to the present invention, in the device in which the number of data bus lines is reduced, the shift voltage owing to the various parasitic electrostatic capacities can be compensated for by a simple construction.

## Claims

1. An active matrix-type display device having rows of pixel electrodes (15₁, 15₂, ..., 65₁, 65₂, ...) connected to scan bus lines (12_{m,1} , 12_{m,2}; 12_{m+1,1}, 12_{m+1,2} ; ...; 62_{m,1} , 62_{m,2}; 62 _{m+1,1}, 62_{m+1,2}; ...) and data bus lines (13ₙ, 13ₙ₊₁, ...), said device is characterized in that each scan bus line is connected to a single row of pixel electrodes and each data bus line is connected to two columns of pixel electrodes through at least one switching element (11₁₁, 11₁₂ ; 11₂₂, 11₂₁; ..., 61₁₁, 61₁₂; 61₂₂, 61₂₁ ; ...) to each pixel electrode, arranged so that the or one switching element for each pixel electrode is controlled by the or one scan bus line for the row and further arranged so that the control signal asserted on the scan bus line to operate the switching element is compensated by a subsequent signal on the same scan bus line or by a signal on another scan bus line for the row so as to leave no residual DC level on the row.

2. An active matrix-type display device as set forth in claim , wherein a pair of first and second scan bus lines is provided for each row of said pixel electrodes, each pixel electrode is connected to said data bus line through a pair of first and second switching elements, said first switching element is turned ON when a positive potential is applied to a gate thereof, said second switching element is turned ON when a negative potential is applied to a gate thereof, a control gate of a first switching element connected to one of a pair of said pixel electrodes of a same row and connected to a same data bus line and a second switching element connected to the other of said pair of said pixel electrodes are connected to one of said pair of said scan bus lines, and control gates of a second switching element connected to the one of said pair of said pixel electrodes and a second switching element connected to the other of said pair of said pixel electrodes are connected to the other of said pair of said scan bus lines.

3. An active matrix-type display device as set forth in claim , wherein a pair of first and second scan bus lines is provided for each row of said pixel electrodes, each pixel electrode is connected to said data bus line through a single switching element, said switching elements are controlled by pulses of the same polarity at one of said scan bus lines, and control gates of switching elements connected to a pair of said pixel electrodes of a same row and connected to a same data bus line are respectively connected to either of said pair of scan bus lines.

4. An active matrix-type display device as set forth in claim 1, wherein one of said scan bus lines is provided for each row of said pixel electrodes, each pixel electrode is connected to said data bus line through a pair of first and second switching elements, said first switching element is turned ON when a positive potential is applied to a gate thereof, said second switching element is turned ON when a negative potential is applied to a gate thereof, control gates of first and second switching elements connected to a pair of said pixel electrodes of a same row and connected to a same data bus line are connected to the same scan bus line.

5. An active matrix-type display device as set forth in claim 3 or 4, wherein said scan bus lines have portions (17, 67₁), elongated to and along said pixel electrodes.

6. An active matrix-type display device as set forth in claim 2, wherein two address pulses having opposite polarity are simultaneously applied to said pair of said scan bus lines.

7. An active matrix-type display device as set forth in claim 3, wherein a compensation pulse which has a pilarity opposite to that of an address pulse being simultaneously applied to one scan bus line of said pair when said address pulse is applied to the other scan bus line of said pair.

8. An active matrix-type display device as set forth in claim 4, wherein an address pulse composed of two pulses that have pulse widths less than a half of a horizontal scanning duration and are shifted to each other by a half of a horizontal scanning duration being applied to said scan bus lines, and a compensation pulse composed of inverted pulses of said address pulse being applied to the next downstream side scan bus line.

9. An active matrix-type display device as set forth in claim 2, wherein address pulses applied to said pair of said scan bus lines have pulse widths less than a half of a horizontal scanning duration, and said address pulses alternately turn to reverse polarity and a sequence order is replaced between said pair of said scan bus lines.

10. An active matrix-type display device as set forth in any one of claims 1 to 9 comprising: first and second insulating substrates arranged parallel to each other and having electro-optic material filled therebetween, wherein said scan bus lines and said data bus lines are formed on said first insulating substrate.

11. An active matrix-type display device as set forth in any one of claims 1 to 9 comprising: first and second insulating substrates arranged parallel to each other and having electro-optic material filled therebetween; and a plurality of reference voltage supply lines (66) on said first insulating substrate, wherein said scan bus lines are formed on said first insulating substrate and said data bus lines are formed on said second insulating substrate.

12. An active matrix-type display device as set forth in claim 11, wherein the potential of the reference voltage supply lines changes cyclically.

13. An active matrix-type display device as set forth in claim 12, wherein the potential of the reference voltage supply lines changes in synchronization with a frame signal.

14. An active matrix-type display device as set forth in claim 12, wherein the potential of the reference voltage supply lines changes with a cycle of a half of a horizontal scanning duration.

15. An active matrix-type display device as set forth in claim 2 comprising: first and second insulating substrates arranged parallel to each other and having electro-optic material filled therebetween; and a plurality of reference voltage supply lines (66) on said first insulating substrate,
wherein said scan bus lines are formed on said first insulating substrate, said data bus lines are formed on said second insulating substrate, and said reference voltage supply lines are composed of two kinds of reference voltage supply lines alternately arranged for every row of pixel electrodes.

16. An active matrix-type display device as set forth in claim 15, wherein two reference voltage signals that are in synchronization with each other and have opposite polarities are respectively applied to said two reference voltage supply lines.

17. An active matrix-type display device as set forth in claim 16, wherein address pulses applied to said pair of said scan bus lines have pulse widths less than a half of a horizontal scanning duration, and said address pulses alternately turn to reverse polarity and a sequence order is replaced between said pair of said scan bus lines.

18. An active matrix-type display device as set forth in claim 3 comprising: first and second insulating substrates arranged parallel to each other and having electro-optic material filled therebetween; and a plurality of reference voltage supply lines (66) on said first insulating substrate,
wherein said scan bus lines are formed on said first insulating substrate, said data bus lines are formed-on said second insulating substrate, and said reference voltage supply lines are composed of two kinds of reference voltage supply lines alternately arranged for every row of pixel electrodes.

19. An active matrix-type display device as set forth in claim 18, wherein two reference voltage signals that are in synchronization with each other and have opposite polarities are respectively applied to said two reference voltage supply lines.

20. An active matrix-type display device as set forth in claim 19, wherein a compensation pulse which has a pilarity opposite to that of an address pulse being simultaneously applied to one scan bus line of said pair when said address pulse is applied to the other scan bus line of said pair.

21. An active matrix-type display device as set forth in claim 19, wherein address pulses applied to said pair of said scan bus lines have pulse widths less than a half of a horizontal scanning duration, and said address pulses alternately turn to reverse polarity and a sequence order is replaced between said pair of said scan bus lines.

## Patentansprüche

1. Anzeigevorrichtung des Aktivmatrixtyps mit Reihen von Pixelelektroden (15₁, 15₂, ..., 65₁, 65₂, ...), die mit Scanbusleitungen (12_{m,1}, 12_{m,2}; 12_{m+1,1}, 12_{m+1,2}; ...; 62_{m,1}, 62_{m,2}; 62_{m+1,1}, 62_{m+1,2}; ...) und Datenbusleitungen (13ₙ, 13ₙ₊₁, ...) verbunden sind, welche Vorrichtung dadurch gekennzeichnet ist, daß jede Scanbusleitung mit einer einzelnen Reihe von Pixelelektroden verbunden ist und jede Datenbus leitung mit zwei Spalten von Pixelelektroden durch wenigstens ein Schaltelement (11₁₁, 11₁₂; 11₂₂, 11₂₁; ..., 61₁₁, 61₁₂; 61₂₂, 61₂₁; ...) für jede Pixelelektrode verbunden ist, so angeordnet, daß das oder ein Schaltelement für jede Pixelelektrode durch die oder eine Scanbusleitung für die Reihe gesteuert wird, und ferner so angeordnet, daß das Steuersignal, das auf die Scanbusleitung angewendet wird, um das Schaltelement zu betreiben, durch ein nachfolgendes Signal auf derselben Scanbusleitung oder durch ein Signal auf einer anderen Scanbusleitung für die Reihe kompensiert wird, um auf der Reihe keinen Gleichstromrestpegel zu hinterlassen.

2. Anzeigevorrichtung des Aktivmatrixtyps nach Anspruch 1, bei der ein Paar von ersten und zweiten Scanbusleitungen für jede Reihe der Pixelelektroden vorgesehen ist, jede Pixelelektrode mit der Datenbus leitung durch ein Paar von ersten und zweiten Schaltelementen verbunden ist, das erste Schaltelement EINgeschaltet wird, wenn ein positives Potential auf ein Gate von ihm angewendet wird, das zweite Schaltelement EINgeschaltet wird, wenn ein negatives Potential auf ein Gate von ihm angewendet wird, ein Steuergate eines ersten Schaltelementes, das mit einer von einem Paar der Pixelelektroden einer selben Reihe verbunden ist und mit einer selben Datenbusleitung verbunden ist, und eines zweiten Schaltelementes, das mit der anderen des Paares der Pixelelektroden verbunden ist, mit einer des Paares der Scanbusleitungen verbunden sind, und Steuergates eines zweiten Schaltelementes, das mit der einen des Paares der Pixelelektroden verbunden ist, und eines zweiten Schaltelementes, das mit der anderen des Paares der Pixelelektroden verbunden ist, mit der anderen des Paares der Scanbusleitungen verbunden sind.

3. Anzeigevorrichtung des Aktivmatrixtyps nach Anspruch 1, bei der ein Paar von ersten und zweiten Scanbusleitungen für jede Reihe der Pixelelektroden vorgesehen ist, jede Pixelelektrode mit der Datenbusleitung durch ein einzelnes Schaltelement verbunden ist, die Schaltelemente durch Impulse mit derselben Polarität auf einer der Scanbusleitungen gesteuert werden, und Steuergates von Schaltelementen, die mit einem Paar der Pixelelektroden einer selben Reihe verbunden sind und mit einer selben Datenbusleitung verbunden sind, jeweilig mit einer des Paares der Scanbusleitungen verbunden sind.

4. Anzeigevorrichtung des Aktivmatrixtyps nach Anspruch 1, bei der eine der Scanbusleitungen für jede Reihe der Pixelelektroden vorgesehen ist, jede Pixelelektrode mit der Datenbusleitung durch ein Paar von ersten und zweiten Schaltelementen verbunden ist, das erste Schaltelement EINgeschaltet wird, wenn ein positives Potential auf ein Gate von ihm angewendet wird, das zweite Schaltelement EINgeschaltet wird, wenn ein negatives Potential auf ein Gate von ihm angewendet wird, Steuergates von ersten und zweiten Schaltelementen, die mit einem Paar der Pixelelektroden einer selben Reihe verbunden sind und mit einer selben Datenbus leitung verbunden sind, mit derselben Scanbusleitung verbunden sind.

5. Anzeigevorrichtung des Aktivmatrixtyps nach Anspruch 3 oder 4, bei der die Scanbusleitungen Abschnitte (17, 67₁) haben, die sich zu den und längs der Pixelelektroden erstrecken.

6. Anzeigevorrichtung des Aktivmatrixtyps nach Anspruch 2, bei der zwei Adressenimpulse mit entgegengesetzter Polarität auf das Paar der Scanbusleitungen gleichzeitig angewendet werden.

7. Anzeigevorrichtung des Aktivmatrixtyps nach Anspruch 3, bei der ein Kompensationsimpuls, der eine Polarität hat, die zu jener eines Adressenimpulses entgegengesetzt ist, auf eine Scanbusleitung des Paares zu derselben Zeit angewendet wird, wenn der Adressenimpuls auf die andere Scanbusleitung des Paares angewendet wird.

8. Anzeigevorrichtung des Aktivmatrixtyps nach Anspruch 4, bei der ein Adressenimpuls, der aus zwei Impulsen gebildet ist, die Impulsbreiten haben, die kleiner als eine Hälfte einer horizontalen Scandauer sind, und um eine Hälfte einer horizontalen Scandauer zueinander verschoben sind, auf die Scanbusleitungen angewendet wird, und ein Kompensationsimpuls, der aus invertierten Impulsen des Adressenimpulses gebildet ist, auf die nächste Scanbusleitung der stromabwärtigen Seite angewendet wird.

9. Anzeigevorrichtung des Aktivmatrixtyps nach Anspruch 2, bei der Adressenimpulse, die auf das Paar der Scanbusleitungen angewendet werden, Impulsbreiten haben, die kleiner als eine Hälfte einer horizontalen Scandauer sind, und die Adressenimpulse alternierend auf entgegengesetzte Polarität schalten und eine Reihenfolge zwischen dem Paar der Scanbusleitungen ausgetauscht ist.

10. Anzeigevorrichtung des Aktivmatrixtyps nach irgendeinem der Ansprüche 1 bis 9, mit: ersten und zweiten Isoliersubstraten, die parallel zueinander angeordnet sind und zwischen die elektrooptisches Material gefüllt ist, bei der die Scanbusleitungen und die Datenbusleitungen auf dem ersten Isoliersubstrat gebildet sind.

11. Anzeigevorrichtung des Aktivmatrixtyps nach irgendeinem der Ansprüche 1 bis 9, mit: ersten und zweiten Isoliersubstraten, die parallel zueinander angeordnet sind und zwischen die elektrooptisches Material gefüllt ist; und einer Vielzahl von Referenzspannungszuführleitungen (66) auf dem ersten Isoliersubstrat, bei der die Scanbusleitungen auf dem ersten Isoliersubstrat gebildet sind und die Datenbusleitungen auf dem zweiten Isoliersubstrat gebildet sind.

12. Anzeigevorrichtung des Aktivmatrixtyps nach Anspruch 11, bei der sich das Potential der Referenzspannungszuführleitungen zyklisch ändert.

13. Anzeigevorrichtung des Aktivmatrixtyps nach Anspruch 12, bei der sich das Potential der Referenzspannungszuführleitungen synchron mit einem Rahmensignal ändert.

14. Anzeigevorrichtung des Aktivmatrixtyps nach Anspruch 12, bei der sich das Potential der Referenzspannungszuführleitungen mit einem Zyklus von einer Hälfte einer horizontalen Scandauer ändert.

15. Anzeigevorrichtung des Aktivmatrixtyps nach Anspruch 2, mit: ersten und zweiten Isoliersubstraten, die parallel zueinander angeordnet sind und zwischen die elektrooptisches Material gefüllt ist; und einer Vielzahl von Referenzspannungszuführleitungen (66) auf dem ersten Isoliersubstrat,
bei der die Scanbusleitungen auf dem ersten Isoliersubstrat gebildet sind, die Datenbusleitungen auf dem zweiten Isoliersubstrat gebildet sind und die Referenzspannungszuführleitungen zwei Arten von Referenzspannungszuführleitungen umfassen, die für jede Reihe von Pixelelektroden alternierend angeordnet sind.

16. Anzeigevorrichtung des Aktivmatrixtyps nach Anspruch 15, bei der zwei Referenzspannungssignale, die miteinander synchron sind und entgegengesetzte Polaritäten haben, jeweilig auf die zwei Referenzspannungszuführleitungen angewendet werden.

17. Anzeigevorrichtung des Aktivmatrixtyps nach Anspruch 16, bei der Adressenimpulse, die auf das Paar der Scanbusleitungen angewendet werden, Impulsbreiten haben, die kleiner als eine Hälfte einer horizontalen Scandauer sind, und die Adressenimpulse alternierend auf entgegengesetzte Polarität schalten und eine Reihenfolge zwischen dem Paar der Scanbusleitungen ausgetauscht ist.

18. Anzeigevorrichtung des Aktivmatrixtyps nach Anspruch 3, mit: ersten und zweiten Isoliersubstraten, die parallel zueinander angeordnet sind und zwischen die elektrooptisches Material gefüllt ist; und einer Vielzahl von Referenzspannungszuführleitungen (66) auf dem ersten Isoliersubstrat,
bei der die Scanbusleitungen auf dem ersten Isoliersubstrat gebildet sind, die Datenbusleitungen auf dem zweiten Isoliersubstrat gebildet sind, und die Referenzspannungszuführleitungen zwei Arten von Referenzspannungszuführleitungen umfassen, die für jede Reihe von Pixelelektroden alternierend angeordnet sind.

19. Anzeigevorrichtung des Aktivmatrixtyps nach Anspruch 18, bei der zwei Referenzspannungssignale, die miteinander synchron sind und entgegengesetzte Polaritäten haben, jeweilig auf die zwei Referenzspannungszuführleitungen angewendet werden.

20. Anzeigevorrichtung des Aktivmatrixtyps nach Anspruch 19, bei der ein Kompensationsimpuls, der eine Polarität hat, die zu jener eines Adressenimpulses entgegengesetzt ist, auf eine Scanbusleitung des Paares zu derselben Zeit angewendet wird, wenn der Adressenimpuls auf die andere Scanbusleitung des Paares angewendet wird.

21. Anzeigevorrichtung des Aktivmatrixtyps nach Anspruch 19, bei der Adressenimpulse, die auf das Paar der Scanbusleitungen angewendet werden, Impulsbreiten haben, die kleiner als eine Hälfte einer horizontalen Scandauer sind, und die Adressenimpulse alternierend auf entgegengesetzte Polarität schalten und die Reihenfolge zwischen dem Paar der Scanbusleitungen ausgetauscht ist.

## Revendications

1. Dispositif d'affichage du type à matrice active ayant des rangées d'électrodes de pixel (15₁, 15₂, ..., 65₁, 65₂, ...) raccordées aux lignes de bus de balayage (12_{m,1}, 12_{m,2} ; 12_{m+1,1}, 12_{m+1,2} ; ... ; 62_{m,1 ;} 62_{m,2 ;} 62_{m+1,1 ;} 62_{m+2,1} ; ...) et aux lignes de bus de données (13ₙ, 13ₙ₊₁ ...), ledit dispositif est caractérisé en ce que chacune des lignes de bus de balayage est raccordée à une rangée unique d'électrodes de pixel et chacune des lignes de bus de données est raccordée à deux colonnes d'électrodes via au moins un élément de commutation (11_{11,} 11₁₂ ; 11₂₂ , 11₂₁ ; ..., 61₁₁, 61₁₂ ; 61₂₂, 61₂₁ ; ...) à chaque électrode de pixel, disposée pour que le ou un élément de commutation pour chaque électrode de pixel soit commandé par la ou une ligne de bus de balayage pour la rangée et disposé en outre pour que le signal de commande maintenu sur la ligne de bus de balayage pour actionner l'élément de commutation soit compensé par un signal qui suit sur la même ligne de bus de balayage ou par un signal sur une autre ligne de bus de balayage pour la rangée afin de ne pas laisser de niveau de courant continu résiduel sur la rangée.

2. Dispositif d'affichage du type à matrice active selon la revendication 1, dans lequel une paire des premières et secondes lignes de bus de balayage est fourni pour chaque rangée desdites électrodes de pixel, et chaque électrode de pixel est raccordée à ladite ligne de bus de données via une paire des premiers et seconds éléments de commutation, ledit premier élément de commutation est conducteur lorsqu'un potentiel positif est appliqué à une grille de celui-ci, ledit second élément de commutation est conducteur lorsqu'un potentiel négatif est appliqué à une grille de celui-ci, une grille de commande d'un premier élément de commutation raccordée à une paire desdites électrodes de pixel de la même rangée et raccordée à une même ligne de bus de données et un second élément de commutation raccordé à l'autre de ladite paire desdites électrodes de pixel sont raccordés à une de ladite paire desdites lignes de bus de balayage, et des grilles de commande d'un second élément de commutation raccordées à une de ladite paire desdites électrodes de pixel et un second élément de commutation raccordé à l'autre de ladite paire desdites électrodes de pixel sont raccordés à l'autre de ladite paire desdites lignes de bus de balayage.

3. Dispositif d'affichage du type à matrice active selon la revendication 1, dans lequel une paire desdites premières et secondes lignes de bus de balayage est fournie pour chaque rangée desdites électrodes de pixel, chaque électrode de pixel est raccordée à ladite ligne de bus de données via un élément de commutation unique, lesdits éléments de commutation sont commandés par des impulsions de la même polarité sur une desdites lignes de bus de balayage, et des grilles de commande des éléments de commutation raccordées à une paire desdites électrodes de pixel de la même rangée et raccordées à une même ligne de bus de données sont respectivement raccordées à l'une ou l'autre de ladite paire des lignes de bus de balayage.

4. Dispositif d'affichage du type à matrice active selon la revendication 1, dans lequel une desdites lignes de bus de balayage est fournie pour chaque rangée desdites électrodes de pixel, chaque électrode de pixel est raccordée à ladite ligne de bus des donnés via une paire des premiers et seconds éléments de commutation, ledit premier élément de commutation est conducteur lorsqu'un potentiel positif est appliqué à une grille de celui-ci, ledit second élément de commutation est conducteur lorsqu'un potentiel négatif est appliqué à une grille de celui-ci, des grilles de commande des premiers et seconds éléments de commutation raccordées à une paire desdites électrodes de pixel d'une même rangée et raccordées à une même ligne de bus de données sont raccordées à la même ligne de bus de balayage.

5. Dispositif d'affichage du type à matrice active selon la revendication 3 ou 4, dans lequel lesdites lignes de bus de balayage ont des parties (17, 67₁), s'étendant auxdites et le long desdites électrodes de pixel.

6. Dispositif d'affichage du type à matrice active selon la revendication 2, dans lequel deux impulsions ayant des polarités opposées sont appliquées simultanément à ladite paire desdites lignes de bus de balayage.

7. Dispositif d'affichage du type à matrice active selon la revendication 3, dans lequel une impulsion de compensation qui a une polarité opposée à celle d'une impulsion d'adresse est simultanément appliquée à une ligne de bus de balayage de ladite paire lorsque ladite impulsion d'adresse est appliquée à l'autre ligne de bus de balayage de ladite paire.

8. Dispositif d'affichage du type à matrice active selon la revendication 4, dans lequel une impulsion d'adresse composée de deux impulsions qui ont des largeurs d'impulsion inférieures à une moitié d'une durée de balayage horizontal et sont décalées l'une de l'autre d'une moitié d'une durée de balayage horizontal étant appliquées auxdites lignes de bus de balayage, et une impulsion de compensation composée d'impulsions inversées de ladite impulsion d'adresse appliquée à la ligne de bus de balayage du côté aval suivant.

9. Dispositif d'affichage du type à matrice active selon la revendication 2, dans lequel des impulsions d'adresse appliquées à ladite paire desdites lignes de bus de balayage ont des largeurs d'impulsion inférieures à une moitié d'une durée de balayage horizontal, et lesdites impulsions d'adresse passent alternativement à la polarité inverse et un ordre de séquence est remplacé entre ladite paire desdites lignes de bus de balayage.

10. Dispositif d'affichage du type à matrice active selon l'une quelconque des revendications 1 à 9 comprenant : les premiers et seconds substrats isolants disposés parallèlement l'un à l'autre et ayant un matériau électro-optique rempli entre eux, où lesdites lignes de bus de balayage et lesdites lignes de bus de données sont formées sur ledit premier substrat isolant.

11. Dispositif d'affichage du type à matrice active selon l'une quelconque des revendications 1 à 9 comprenant : les premiers et seconds substrats isolants disposés parallèlement l'un à l'autre et ayant un matériau électro-optique rempli entre eux ; et une pluralité de lignes d'alimentation de tension de référence (66) sur ledit premier substrat isolant, où lesdites lignes de bus de balayage sont formées sur ledit premier substrat isolant et lesdites lignes de bus de données sont formées sur ledit second substrat isolant.

12. Dispositif d'affichage du type à matrice active selon la revendication 11, dans lequel le potentiel des lignes d'alimentation de tension de référence change cycliquement.

13. Dispositif d'affichage du type à matrice active selon la revendication 12, où le potentiel des lignes d'alimentation de tension de référence change en synchronisme avec un signal de trame.

14. Dispositif d'affichage du type à matrice active selon la revendication 12, où le potentiel des lignes d'alimentation de tension de référence change avec un cycle d'une moitié d'une durée de balayage horizontal.

15. Dispositif d'affichage du type à matrice active selon la revendication 2 comprenant : les premiers et seconds substrats isolants disposés parallèlement l'un à l'autre ayant un matériau électro-optique rempli entre eux ; et une pluralité de lignes d'alimentation de tension de référence (66) sur ledit premier substrat isolant,
où lesdites lignes de bus de balayage sont formées sur ledit premier substrat isolant, lesdites lignes de bus de données sont formées sur ledit second substrat isolant, et lesdites lignes d'alimentation de tension de référence sont composées de deux types de lignes d'alimentation de tension de référence disposées alternativement pour chaque rangée d'électrodes de pixel.

16. Dispositif d'affichage du type à matrice active selon la revendication 15, dans lequel deux signaux de tension de référence qui sont en synchronisme l'un avec l'autre et ont des polarités opposées, sont respectivement appliquées auxdites deux lignes d'alimentation de tension de référence.

17. Dispositif d'affichage du type à matrice active selon la revendication 16, où les impulsions d'adresse appliquées à ladite paire desdites lignes de bus de balayage ont des largeurs d'impulsion inférieures à une moitié d'une durée de balayage horizontal, et lesdites impulsions d'adresse passent alternativement à la polarité inverse et un ordre de séquence est remplacé entre ladite paire desdites lignes de bus de balayage.

18. Dispositif d'affichage du type à matrice active selon la revendication 3 comprenant : les premiers et seconds substrats isolants disposés parallèlement l'un à l'autre et ayant un matériau électro-optique rempli entre eux ; et une pluralité de lignes d'alimentation de tension de référence (66) sur ledit premier substrat isolant,
dans lequel lesdites lignes de bus de balayage sont formées sur ledit premier substrat isolant, lesdites lignes de bus de données sont formées sur ledit second substrat isolant, et lesdites lignes d'alimentation de tension de référence sont composées de deux types de lignes d'alimentation de tension de référence disposées alternativement pour chaque rangée d'électrodes de pixel.

19. Dispositif d'affichage du type à matrice active selon la revendication 18, dans lequel deux signaux de tension de référence qui sont en synchronisme l'un avec l'autre et ont leurs polarités opposées sont respectivement appliquées auxdites deux lignes d'alimentation de tension de référence.

20. Dispositif d'affichage du type à matrice active selon la revendication 19, dans lequel une impulsion de compensation qui a une polarité opposée à celle d'une impulsion d'adresse est simultanément appliquée à une ligne de bus de balayage de ladite paire lorsque ladite impulsion d'adresse est appliquée à l'autre ligne de bus de balayage de ladite paire.

21. Dispositif d'affichage du type à matrice active selon la revendication 19, dans lequel des impulsions d'adresse appliquées à ladite paire desdites lignes de bus de balayage ont des largeurs d'impulsions inférieures à la moitié d'une durée de balayage horizontal, et lesdites impulsions d'adresse passent alternativement à la polarité inverse et un ordre de séquence est remplacé entre ladite paire desdites lignes de bus de balayage.
